# EUROPEAN PATENT APPLICATION

(11) **EP 4 495 768 A1**
(43) Date of publication of application: **22.01.2025**
(21) Application number: 23815120.3
(22) Date of filing: 27.05.2023
(51) Int. Cl.: G06F 9/48

(54) **SCHEDULING APPARATUS AND METHOD, AND RELATED DEVICE**

(30) Priority: 30.05.2022 CN 202210601624
(71) Applicant: Huawei Technologies Co., Ltd., Shenzhen, Guangdong 518129 (CN)
(72) Inventor: FANG, Bo, Shenzhen, Guangdong 518129 (CN); LIN, Jiashu, Shenzhen, Guangdong 518129 (CN); LIU, Hu, Shenzhen, Guangdong 518129 (CN); LAM, Hou Fun, Shenzhen, Guangdong 518129 (CN); PAN, Qiuyi, Shenzhen, Guangdong 518129 (CN)
(74) Representative: MERH-IP Matias Erny Reichl Hoffmann Patentanwälte PartG mbB
(86) International application number: PCT/CN2023/096700
(87) International publication number: WO 2023/231937

(57) **Abstract**

This application provides a scheduling apparatus and method, and a related device. The scheduling apparatus includes a dispatcher coupled to an execution apparatus. The dispatcher includes a plurality of first buffers, each of the plurality of first buffers is configured to cache target tasks of one task type, the target tasks include a thread subtask and a cache management operation task, and the cache management operation task indicates to perform a cache management operation on input data or output data of the thread subtask. The dispatcher is configured to: receive a plurality of first target tasks, and cache the plurality of first target tasks in the plurality of first buffers based on task types; and dispatch a plurality of second target tasks to the execution apparatus. Any one of the plurality of second target tasks is a target task cached by the plurality of first buffers, and the plurality of second target tasks are separately cached by different first buffers. According to this application, graph computing efficiency can be improved.

## Description

This application claims priority to Chinese Patent Application No. 202210601624.3, filed with the China National Intellectual Property Administration on May 30, 2022 and entitled "SCHEDULING APPARATUS AND METHOD, AND RELATED DEVICE", which is incorporated herein by reference in its entirety.

### TECHNICAL FIELD

This application relates to the field of graph computing technologies, and in particular, to a scheduling apparatus and method, and a related device.

### BACKGROUND

In recent years, with development of the Internet and advent of the big data era, a requirement for quickly processing massive large-scale data becomes more urgent. In a plurality of practical applications, graph data structures are used to describe relationships between data. For example, large-scale graph computing is used in scenarios such as social network relationship mining, an e-commerce recommendation system, impact of traffic accidents on road networks, and drug model research. In addition, a large amount of big data in a non-graph data structure is often converted into the graph data structure before the big data is processed and analyzed. Research on large-scale graph data processing is becoming a focus attracting wide attention in academia and industry. Therefore, how to improve graph computing efficiency has become an urgent technical problem to be resolved.

### SUMMARY

This application provides a scheduling apparatus and method, and a related device, to improve graph computing efficiency.

According to a first aspect, this application provides a scheduling apparatus, including a dispatcher. The dispatcher is coupled to an execution apparatus, the dispatcher includes a plurality of first buffers, each of the plurality of first buffers is configured to cache target tasks of one task type, the target tasks include a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask. The dispatcher is configured to: receive a plurality of first target tasks, and cache the plurality of first target tasks in the plurality of first buffers based on task types; and dispatch a plurality of second target tasks to the execution apparatus. Any one of the plurality of second target tasks is a target task cached by the plurality of first buffers, and the plurality of second target tasks are separately cached by different first buffers. It should be noted that the scheduling apparatus in this application is coupled to a host, and the target task scheduled, dispatched, and executed in the scheduling apparatus initially comes from a memory of the host. In this application, the scheduling apparatus used for graph computing includes the dispatcher. The dispatcher may receive target tasks of different task types in parallel, cache the received target tasks of different task types in different first buffers, and dispatch, in parallel to the execution apparatus, the target tasks of different task types cached by different first buffers. The dispatcher caches the target tasks of different task types in different first buffers, so that a queue head blocking problem during heterogeneous task dispatching can be resolved, and dispatch efficiency of the target tasks can be improved. The dispatcher dispatches the target tasks of different task types to the execution apparatus in parallel, so that a dispatch delay of the target tasks can be reduced, and the dispatch efficiency of the target tasks can be improved. Further, because the dispatcher dispatches the target tasks of different task types to the execution apparatus in parallel, the execution apparatus may alternatively execute the target tasks of different task types in parallel. For example, the execution apparatus includes different types of execution units (that is, heterogeneous execution units), and the dispatcher dispatches, in parallel, the target tasks of different task types to different types of execution units for execution, so that utilization of the execution units and execution efficiency of the target tasks can be improved. In conclusion, the scheduling apparatus provided in this application can improve graph computing efficiency. In addition, in this application, the scheduling apparatus schedules and dispatches the target task, that is, a function of scheduling and dispatching the target task is implemented by hardware. In comparison with software scheduling, software scheduling load can be reduced.

In a possible implementation, the scheduling apparatus further includes a scheduler, and the scheduler includes a plurality of second buffers. The scheduler is configured to: receive a plurality of third target tasks, and cache the plurality of third target tasks in the plurality of second buffers; and send the plurality of first target tasks to the dispatcher. Any one of the plurality of first target tasks is a target task cached by the plurality of second buffers. The target task received by the scheduler is a target task whose control dependency is removed or whose control dependency does not exist. The plurality of third target tasks are target tasks whose control dependencies are removed or whose control dependencies do not exist. In this implementation, the scheduling apparatus further includes the scheduler. The scheduler may receive different target tasks in parallel, cache the received target tasks in the plurality of second buffers, and schedule, in parallel, the target tasks of different task types cached in the plurality of second buffers to the dispatcher. In this way, the scheduler may cache the target task whose control dependency is removed or whose control dependency does not exist, and deliver the cached target task to the dispatcher based on a specific scheduling policy, so that storage utilization of the first buffer in the dispatcher can be maximized.

In a possible implementation, each of the plurality of second buffers is configured to cache target tasks of one category, and target tasks of a same category have a same one of the following: a task type, a priority, and an execution unit. In this implementation, a plurality of scheduling policies of the target task are provided, to improve scheduling flexibility of the target task. For example, the scheduler caches the target tasks of different task types in different second buffers, caches target tasks of different priorities in different second buffers, or caches target tasks executed by different execution units in different second buffers. In this way, the queue head blocking problem can be resolved when heterogeneous tasks are scheduled to the dispatcher, and scheduling efficiency of the target task can be improved.

In a possible implementation, the scheduling apparatus further includes a microcontroller unit MCU and a third buffer, the third buffer caches a descriptor of a fourth target task, and the fourth target task is any one of the plurality of third target tasks. The MCU is configured to: read the descriptor of the fourth target task from the third buffer, where the descriptor of the fourth target task includes a first target count, the first target count indicates a quantity of fifth target tasks whose execution is uncompleted, and the fourth target task depends on the fifth target task; and if the first target count is zero, send the fourth target task to the scheduler. It should be understood that, when a quantity of other target tasks on which a target task depends is zero, it indicates that the target task is the target task whose control dependency is removed or whose control dependency does not exist. The scheduling apparatus is coupled to the host. The MCU obtains the fourth target task from the memory of the host, and sends the fourth target task to the scheduler. In this implementation, the scheduling apparatus cooperates with the MCU and the third buffer to complete control dependency management of the target task, thereby providing a more flexible and changeable control function of the control dependency management, and avoiding a problem of poor adaptability of the scheduling apparatus. In a complex and changeable service scenario, a fit degree between the scheduling apparatus and the application scenario can be effectively improved, and costs can be reduced.

In a possible implementation, the MCU is further configured to notify the third buffer to obtain and cache the descriptor of the fourth target task. The fourth target task may be the target task on which the control dependency does not exist. Alternatively, in other words, the fourth target task is the target task on which the control dependency is initially removed. The scheduling apparatus is coupled to the host, and the third buffer obtains the descriptor of the fourth target task from the memory of the host. In this implementation, the MCU notifies the third buffer to prefetch the descriptor of the target task, and the third buffer locally caches the prefetched descriptor of the target task. In this way, when the MCU performs control dependency management on the target task, the descriptor of the target task has been cached in the third buffer, thereby reducing a delay of performing control dependency management on the target task.

In a possible implementation, the execution apparatus includes a plurality of execution units, the plurality of first target tasks include the fourth target task, and the plurality of second target tasks include the fourth target task. The dispatcher is specifically configured to: read the descriptor of the fourth target task from the third buffer; and if the descriptor of the fourth target task further includes a first target quantity, segment the fourth target task into first block subtasks of the first target quantity, and dispatch the first block subtasks of the first target quantity to at least one of the plurality of execution units. The first target quantity indicates a quantity of first block subtasks included in the fourth target task. In this implementation, the dispatcher segments the target task into a plurality of block subtasks that are of a finer granularity and that can be independently dispatched, and dispatches the plurality of block subtasks to the plurality of execution units for execution. In this way, a dispatch and execution policy of the subgraph task with the finer granularity is provided, parallelism of dispatching and execution of the subtasks in the subgraph is fully explored, and parallel execution of the block subtasks in the subgraph is implemented, so that the utilization of the execution unit can be improved, and overall execution time can be reduced.

In a possible implementation, the dispatcher is further configured to: after receiving, from the at least one execution unit, a notification indicating that execution of the first block subtasks of the first target quantity is completed, send, to the MCU, a notification indicating that execution of the fourth target task is completed. In this implementation, the execution unit may return an execution status of the block subtask to the dispatcher. After execution of all block subtasks obtained by segmenting a target task is completed, it indicates that execution of the target task is completed, and the dispatcher sends, to the MCU, a notification indicating that execution of the target task is completed. In this way, the MCU is notified to perform control dependency management on a successor task of the target task. The successor task of the target task is another target task that depends on the target task.

In a possible implementation, the scheduler is further configured to: read the descriptor of the fourth target task from the third buffer; and if the descriptor of the fourth target task further includes a first target index number, notify the third buffer to obtain and cache a descriptor of first target data. The first target index number is used to identify the first target data, and input data of the fourth target task includes the first target data. The scheduling apparatus is coupled to the host, and the third buffer obtains the descriptor of the first target data from the memory of the host. In this implementation, in a process in which the scheduler schedules the target task to the dispatcher, for example, when the target task exits the second buffer, the scheduler may read the descriptor of the target task, and determine whether the input data of the target task needs to be prefetched before the target task is executed. If the input data of the target task needs to be prefetched, the scheduler notifies the third buffer to prefetch and cache the descriptor of the input data of the target task. It should be understood that when generating a cache management operation task indicating to prefetch the input data of the target task, the dispatcher needs to use the descriptor of the input data of the target task. In this way, when the dispatcher needs to use the descriptor of the input data of the target task, the descriptor of the input data of the target task has been cached in the third buffer, so that a hit rate of reading, by the dispatcher, the descriptor of the input data from the third buffer can be improved.

In a possible implementation, the plurality of first target tasks include the fourth target task. The dispatcher is further configured to: read the descriptor of the first target data from the third buffer; and if the descriptor of the first target data includes a second target index number, generate a first cache management operation task, and dispatch the first cache management operation task to the execution apparatus. The second target index number is used to identify the fourth target task, and the first cache management operation task indicates to prefetch the first target data. In this implementation, the dispatcher may generate the cache management operation task indicating to prefetch the input data of the target task, and dispatch the cache management operation task to the execution apparatus for execution, to prefetch the input data of the target task. In this way, before the target task is executed, the input data of the target task is prefetched in time, and is locally cached. For example, the execution apparatus includes a fourth buffer, and the execution apparatus caches the prefetched input data of the target task in the fourth buffer. When executing the target task, the scheduling apparatus does not need to externally obtain the input data of the target task, but directly obtains the input data of the target task from a local buffer. This can effectively improve a hit rate of obtaining the input data of the target task, and reduce access bandwidth for obtaining the input data of the target task and a delay of obtaining the input data of the target task. It should be noted that the input data of the target task includes shared input data and exclusive input data. The shared input data is input data shared by a plurality of target tasks, and the exclusive input data is input data dedicated to only a specific target task. The shared input data needs to be prefetched for only one time, and does not need to be prefetched each time before the target task is executed, thereby reducing access bandwidth for prefetching the input data and reducing a delay of prefetching the input data. For example, in a large-scale graph computing task, input data between a plurality of subnode tasks is repetitive, that is, the plurality of subnode tasks use a same set of common configuration parameters like weights. Therefore, the input data of the target task may be classified into the shared input data and the exclusive input data. The shared data needs to be prefetched for only one time when a first target task to which the shared data is input is executed. This avoids repeated prefetching, waste of the bandwidth, and an increase of the delay. An input data prefetching mechanism provided in this application is particularly applicable to a data-type application scenario in which the memory of the host is frequently accessed. A cache loss of valid data is avoided through timely prefetching.

In a possible implementation, the plurality of second target tasks include the fourth target task, the descriptor of the first target data further includes a second target count, the second target count indicates a quantity of sixth target tasks whose execution is uncompleted, input data of the sixth target task includes the first target data, and the sixth target task includes the fourth target task. The MCU is further configured to: after receiving, from the dispatcher, the notification indicating that execution of the fourth target task is completed, notify the third buffer to subtract one from the second target count. In this implementation, the first target data is the shared input data, and is the input data of a type of target task, namely, the sixth target task. There may be one or more sixth target tasks. Therefore, the first target data only needs to be prefetched for one time, and does not need to be prefetched each time before the target task is executed. In this way, access bandwidth for prefetching the first target data can be reduced, and a delay of prefetching the first target data can be reduced. In addition, after receiving a notification indicating that execution of any sixth target task is completed, for example, after receiving the notification indicating that execution of the fourth target task is completed, the MCU performs data lifecycle management on the first target data. In this way, when the first target data does not need to be used, the first target data is released in time, thereby improving a hit rate and effective utilization of the local buffer in the scheduling apparatus.

In a possible implementation, the MCU is further configured to: when the second target count is decreased to zero, send a second cache management operation task to the scheduler. The second cache management operation task indicates to invalidate the first target data. In this implementation, when the first target data does not need to be used, the first target data is invalidated in time. In this way, data, in the buffer, that has been used and is no longer used is released in time, so that a problem that the hit rate and the effective utilization of the buffer are reduced because the invalid data occupies buffer space for long time is not caused.

In a possible implementation, the plurality of first target tasks include the fourth target task. The dispatcher is further configured to: read the descriptor of the fourth target task from the third buffer; and if the descriptor of the fourth target task further includes a third target index number, notify the third buffer to obtain and cache a descriptor of second target data. The third target index number is used to identify the second target data, and the second target data includes a part or all of output data of the fourth target task. The scheduling apparatus is coupled to the host, and the third buffer obtains the descriptor of the second target data from the memory of the host. In this implementation, in a process in which the dispatcher dispatches the target task to the execution apparatus, for example, when the target task exits the first buffer, the dispatcher may read the descriptor of the target task, and determine whether the output data on which data lifecycle management needs to be performed exists in the target task. If the output data on which data lifecycle management needs to be performed exists, the dispatcher notifies the third buffer to prefetch and cache the descriptor of the output data on which data lifecycle management needs to be performed. It should be understood that when performing data lifecycle management on the output data of the target task, the MCU needs to use the descriptor of the output data of the target task. In this way, when the MCU needs to use the descriptor of the output data of the target task, the descriptor of the output data of the target task has been cached in the third buffer, so that a hit rate of reading, by the MCU, the descriptor of the output data from the third buffer can be improved.

In a possible implementation, the plurality of second target tasks include the fourth target task, the descriptor of the second target data includes a third target count, the third target count indicates a quantity of seventh target tasks whose execution is uncompleted, the second target data includes a part or all of output data of the seventh target task, and the seventh target task includes the fourth target task. The MCU is further configured to: after receiving, from the dispatcher, the notification indicating that execution of the fourth target task is completed, notify the third buffer to subtract one from the third target count. In this implementation, the second target data includes a part or all of the output data of a type of target task, namely, the seventh target task. There may be one or more seventh target tasks. In this way, after receiving a notification indicating that execution of any seventh target task is completed, for example, after receiving the notification indicating that execution of the fourth target task is completed, the MCU performs data lifecycle management on the second target data. In this way, when the second target data is generated, the second target data is written back to the memory of the host in time, the local buffer space in the scheduling apparatus is released, and the effective utilization of the local buffer in the scheduling apparatus is improved.

In a possible implementation, the MCU is further configured to: when the third target count is decreased to zero, send a third cache management operation task to the scheduler. The third cache management operation task indicates to write the second target data to the host, and the scheduling apparatus is coupled to the host. In this implementation, when the second target data is generated, the second target data is written back in time. In this way, the output data of the target task is written back to the memory of the host, and the local buffer space in the scheduling apparatus is released. Therefore, a problem that the hit rate and the effective utilization of the buffer are reduced because the output data of the target task occupies the buffer space for long time is not caused.

In a possible implementation, the plurality of first target tasks include the fourth target task, and the plurality of second target tasks include the fourth target task. The dispatcher is further configured to: read the descriptor of the fourth target task from the third buffer; and if the descriptor of the fourth target task further includes a fourth target index number, notify the third buffer to obtain and cache a descriptor of an eighth target task. The fourth index number is used to identify the eighth target task, and the eighth target task depends on the fourth target task. The scheduling apparatus is coupled to the host, and the third buffer obtains the descriptor of the eighth target task from the memory of the host. The eighth target task depends on the fourth target task, and the eighth target task is a successor task of the fourth target task. In this implementation, in the process in which the dispatcher dispatches the target task to the execution apparatus, for example, when the target task exits the first buffer, the dispatcher notifies the third buffer to prefetch and cache the descriptor of the successor task of the target task. It should be understood that when performing control dependency management on the successor task of the target task, the MCU needs to use the descriptor of the successor task of the target task. In this way, when the MCU needs to use the descriptor of the successor task of the target task, the descriptor of the successor task of the target task has been cached in the third buffer, so that a hit rate of reading, by the MCU, the descriptor of the successor task from the third buffer can be improved.

In a possible implementation, the descriptor of the eighth target task includes a fourth target count, the fourth target count indicates a quantity of ninth target tasks whose execution is uncompleted, the eighth target task depends on the ninth target task, and the ninth target task includes the fourth target task. The MCU is further configured to: after receiving, from the dispatcher, the notification indicating that execution of the fourth target task is completed, notify the third buffer to subtract one from the fourth target count. The eighth target task depends on a type of target task, namely, the ninth target task, the eighth target task is a successor task of the type of target task, namely, the ninth target task, and the fourth target task is of the type of target task, namely, the ninth target task. In this implementation, after execution of the fourth target task is completed, the MCU performs control dependency management on the eighth target task. In addition, because the dispatcher continuously dispatches target tasks to the execution apparatus, after execution of the fourth target task is completed, the dispatcher immediately dispatches, for execution, another target task to an execution unit that originally executes the fourth target task. In this way, it can be ensured that removal of a dependency of a target task and execution of the another target task are performed in parallel, and a delay of removing the dependency of the target task is concealed behind the execution of the another target task, thereby improving overall performance. For example, in the large-scale graph computing task, a complex dependency usually exists between subgraph tasks, and limits a degree of parallelism for executing the subgraph tasks. According to this application, the delay of removing the dependency of the task can be effectively concealed, an overall scheduling delay can be reduced, and the utilization of the execution unit can be improved. For example, in a scenario in which a target task A depends on a target task B, and a target task C depends on a target task D, after execution of the target task A is completed, the target task C and removal of a dependency of the target task B may be executed in parallel, and time for removing the dependency of the target task B is completely hidden in execution time of the target task C; and after execution of the target task C is completed, the target task B and removal of a dependency of the target task D may be continued to be immediately executed.

In a possible implementation, the MCU is further configured to: when the fourth target count is decreased to zero, send the eighth target task to the scheduler. The scheduling apparatus is coupled to the host. The MCU obtains the eighth target task from the memory of the host, and sends the eighth target task to the scheduler. In this implementation, the eighth target task depends on the fourth target task. After execution of the fourth target task is completed and a dependency of the eighth target task is removed, the eighth target task may be pushed to the scheduler for scheduling, scheduled to the dispatcher for dispatching, and dispatched to the execution apparatus for execution. In this way, a loop that forms the tasks in the subgraph is executed repeatedly until execution of the subgraph ends.

According to a second aspect, this application provides a scheduling method, applied to a scheduling apparatus. The scheduling apparatus includes a dispatcher, the dispatcher is coupled to an execution apparatus, the dispatcher includes a plurality of first buffers, each of the plurality of first buffers is configured to cache target tasks of one task type, the target tasks include a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask. The method includes: The dispatcher receives a plurality of first target tasks, and caches the plurality of first target tasks in the plurality of first buffers based on task types. The dispatcher dispatches a plurality of second target tasks to the execution apparatus. Any one of the plurality of second target tasks is a target task cached by the plurality of first buffers, and the plurality of second target tasks are separately cached by different first buffers.

In a possible implementation, the scheduling apparatus further includes a scheduler, and the scheduler includes a plurality of second buffers. The method further includes: The scheduler receives a plurality of third target tasks, and caches the plurality of third target tasks in the plurality of second buffers. The scheduler sends the plurality of first target tasks to the dispatcher. Any one of the plurality of first target tasks is a target task cached by the plurality of second buffers.

In a possible implementation, each of the plurality of second buffers is configured to cache target tasks of one category, and target tasks of a same category have a same one of the following: a task type, a priority, and an execution unit.

In a possible implementation, the scheduling apparatus further includes a microcontroller unit MCU and a third buffer, the third buffer caches a descriptor of a fourth target task, and the fourth target task is any one of the plurality of third target tasks. The method further includes: The MCU reads the descriptor of the fourth target task from the third buffer. The descriptor of the fourth target task includes a first target count, the first target count indicates a quantity of fifth target tasks whose execution is uncompleted, and the fourth target task depends on the fifth target task. If the first target count is zero, the MCU sends the fourth target task to the scheduler.

In a possible implementation, the method further includes: The MCU notifies the third buffer to obtain and cache the descriptor of the fourth target task.

In a possible implementation, the execution apparatus includes a plurality of execution units, the plurality of first target tasks include the fourth target task, and the plurality of second target tasks include the fourth target task. The dispatching a plurality of second target tasks to the execution apparatus includes: reading the descriptor of the fourth target task from the third buffer; and if the descriptor of the fourth target task further includes a first target quantity, segmenting the fourth target task into first block subtasks of the first target quantity, and dispatching the first block subtasks of the first target quantity to at least one of the plurality of execution units. The first target quantity indicates a quantity of first block subtasks included in the fourth target task.

In a possible implementation, the method further includes: After the dispatcher receives, from the at least one execution unit, a notification indicating that execution of the first block subtasks of the first target quantity is completed, the dispatcher sends, to the MCU, a notification indicating that execution of the fourth target task is completed.

In a possible implementation, the method further includes: The scheduler reads the descriptor of the fourth target task from the third buffer. If the descriptor of the fourth target task further includes a first target index number, the scheduler notifies the third buffer to obtain and cache a descriptor of first target data. The first target index number is used to identify the first target data, and input data of the fourth target task includes the first target data.

In a possible implementation, the plurality of first target tasks include the fourth target task. The method further includes: The dispatcher reads the descriptor of the first target data from the third buffer. If the descriptor of the first target data includes a second target index number, the dispatcher generates a first cache management operation task, and dispatches the first cache management operation task to the execution apparatus. The second target index number is used to identify the fourth target task, and the first cache management operation task indicates to prefetch the first target data.

In a possible implementation, the plurality of second target tasks include the fourth target task, the descriptor of the first target data further includes a second target count, the second target count indicates a quantity of sixth target tasks whose execution is uncompleted, input data of the sixth target task includes the first target data, and the sixth target task includes the fourth target task. The method further includes: After the MCU receives, from the dispatcher, the notification indicating that execution of the fourth target task is completed, the MCU notifies the third buffer to subtract one from the second target count.

In a possible implementation, the method further includes: When the second target count is decreased to zero, the MCU sends a second cache management operation task to the scheduler. The second cache management operation task indicates to invalidate the first target data.

In a possible implementation, the plurality of first target tasks include the fourth target task. The method further includes: The dispatcher reads the descriptor of the fourth target task from the third buffer. If the descriptor of the fourth target task further includes a third target index number, the dispatcher notifies the third buffer to obtain and cache a descriptor of second target data. The third target index number is used to identify the second target data, and the second target data includes a part or all of output data of the fourth target task.

In a possible implementation, the plurality of second target tasks include the fourth target task, the descriptor of the second target data includes a third target count, the third target count indicates a quantity of seventh target tasks whose execution is uncompleted, the second target data includes a part or all of output data of the seventh target task, and the seventh target task includes the fourth target task. The method further includes: After the MCU receives, from the dispatcher, the notification indicating that execution of the fourth target task is completed, the MCU notifies the third buffer to subtract one from the third target count.

In a possible implementation, the method further includes: When the third target count is decreased to zero, the MCU sends a third cache management operation task to the scheduler. The third cache management operation task indicates to write the second target data to a host, and the scheduling apparatus is coupled to the host.

In a possible implementation, the plurality of first target tasks include the fourth target task, and the plurality of second target tasks include the fourth target task. The method further includes: The dispatcher reads the descriptor of the fourth target task from the third buffer. If the descriptor of the fourth target task further includes a fourth target index number, the dispatcher notifies the third buffer to obtain and cache a descriptor of an eighth target task. The fourth index number is used to identify the eighth target task, and the eighth target task depends on the fourth target task.

In a possible implementation, the descriptor of the eighth target task includes a fourth target count, the fourth target count indicates a quantity of ninth target tasks whose execution is uncompleted, the eighth target task depends on the ninth target task, and the ninth target task includes the fourth target task. The method further includes: After the MCU receives, from the dispatcher, the notification indicating that execution of the fourth target task is completed, the MCU notifies the third buffer to subtract one from the fourth target count.

In a possible implementation, the method further includes: When the fourth target count is decreased to zero, the MCU sends the eighth target task to the scheduler.

It should be noted that, for beneficial effect of the second aspect, refer to the descriptions of the first aspect. Details are not described herein again.

According to a third aspect, this application provides an electronic device. The electronic device has a function of implementing any scheduling method in the second aspect. The function may be implemented by hardware, or may be implemented by hardware executing corresponding software. The hardware or the software includes one or more modules corresponding to the function.

According to a fourth aspect, this application provides an electronic device. The electronic device includes any scheduling apparatus according to the first aspect. The electronic device may further include a memory. The memory is configured to be coupled to the scheduling apparatus, and the memory stores necessary program instructions and data of a processor in the scheduling apparatus. The electronic device may further include a communication interface, used for communication between the electronic device and another device or a communication network.

According to a fifth aspect, this application provides a computer storage medium. The computer storage medium stores a computer program, and when the computer program is executed by a scheduling apparatus, the scheduling apparatus is enabled to perform a procedure of the scheduling method according to any one of the implementations of the second aspect.

According to a sixth aspect, this application provides a computer program. The computer program includes instructions, and when the computer program is executed by a scheduling apparatus, the scheduling apparatus is enabled to perform a procedure of the scheduling method according to any one of the implementations of the second aspect.

According to a seventh aspect, this application provides a chip system. The chip system includes any scheduling apparatus according to the first aspect. In a possible implementation, the chip system further includes a memory. The memory is configured to store necessary or related program instructions and data of a processor in the scheduling apparatus. The chip system may include a chip, or may include a chip and another discrete component.

### BRIEF DESCRIPTION OF DRAWINGS

FIG. 1 is a diagram of a software architecture of a computing graph compilation and execution system according to this application;
FIG. 2 is a diagram of a hardware architecture of a computing graph compilation and execution system according to this application;
FIG. 3 is a flowchart of steps of performing computing graph compilation and execution by the system shown in FIG. 2;
FIG. 4 is a diagram of procedures of scheduling and dispatching one TST or one CMO task according to this application; and
FIG. 5 is a schematic flowchart of a scheduling method according to this application.

### DESCRIPTION OF EMBODIMENTS

To make persons skilled in the art understand technical solutions in this application better, the following clearly and completely describes the technical solutions in this application with reference to the accompanying drawings in this application. It is clear that, the described embodiments are merely some rather than all of embodiments of this application. All other embodiments obtained by persons of ordinary skill in the art based on embodiments of this application without creative efforts shall fall within the protection scope of this application.

Terms "include" and "have" and any transformation thereof in the specification, claims, and accompanying drawings of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

An "embodiment" mentioned in the specification means that particular features, structures, or characteristics described with reference to embodiments may be included in at least one embodiment of this application. The phrase appear at various locations in this specification may neither necessarily mean a same embodiment, nor mean an independent or optional embodiment exclusive from another embodiment. Persons skilled in the art explicitly or implicitly understand that an embodiment described in the specification may be combined with another embodiment.

First, knowledge related in this application is described, so that persons skilled in the art can understand this application.

With development of mobile Internet technologies, 5G networks, sensors, and Internet of things technologies, a large amount of data is generated every moment in the world. Scales of graphs abstracted from a plurality of fields increase exponentially. A quantity of edges in the graph can reach hundreds of millions. In addition, a natural graph usually shows a very tilted power-law (power-law) distribution characteristic. This brings great challenges to graph computing. Limited by memory resources and graph scales, usually, an entire graph cannot be stored in a memory in the field of graph computing. How to complete a graph-related algorithm in limited memory space is also one of key points of graph computing research. In the graph computing, how to segment a large-scale graph into several subgraphs is a very important task.

In a big data application scenario, a data value decreases as time passes. Therefore, latest data needs to be analyzed as soon as possible to obtain results, and the results need to be displayed in real time. In a large-scale graph computing task, large quantities of vertices and edges exist in a graph, and a complex dependency exists between a task and data in the graph. Consequently, this is also a difficult problem for real-time computing of the large-scale graph computing task.

To adapt to characteristics such as a huge graph data scale and a dynamic change, a multi-core heterogeneous system can allocate different types of computing tasks to different types of processor cores for parallel processing, and provide a more flexible and efficient processing mechanism for applications with different requirements. Therefore, the multi-core heterogeneous system is widely used to implement efficient analysis and computing of large-scale graph data. Under a background that the multi-core heterogeneous system integrates abundant heterogeneous computing and communication resources, practitioners need to face a major challenge: how to reduce CPU scheduling load and design a proper scheduling policy to allocate different types of computing/communication tasks to different computing/communication resources in parallel, to reduce a scheduling delay, improve resource utilization of computing units, and finally improve overall efficiency and real-time performance of the computing tasks.

In addition, for an ultra-large computing graph, to improve a degree of parallelism of computing, it is also a common processing method to segment a large-scale data flow graph into a plurality of subgraphs that may be executed in parallel based on comprehensive policies such as a dependency and execution costs. However, a dependency often exists between tasks in a subgraph, for example, a context dependency in speech recognition and a frame dependency between two consecutive frames in video surveillance. How to minimize computing execution time and time for removing a dependency in a graph in a graph computing system to reduce a scheduling delay is another major challenge for the practitioners.

Under real limitation of a large graph scale but limited memory space, how to improve effective utilization of a system memory, reduce a memory access delay, and reduce memory bandwidth to improve performance of the large-scale graph computing task is also a great challenge for the practitioners.

Therefore, technical problems that need to be resolved in this application are that in a large-scale graph computing task, a task computing delay is long, and computing efficiency is low due to a large computing scale, the dependency between tasks in the graph, the limited memory space, and a large quantity of task types. For example, the technical problems may include the following:
(1) When the computing graph includes computing/communication tasks of a plurality of task types, different heterogeneous resources need to be scheduled at the same time for execution. If a scheduling transaction of a CPU cannot be properly offloaded, and computing/communication tasks of different task types cannot be allocated to different computing/communication resources by designing the proper scheduling policy, problems such as mutual blocking between heterogeneous tasks, low utilization of an execution unit, and an increase in the scheduling delay are caused.
(2) When a dependency exists between tasks in a computing graph, if a problem that removal of the dependency between the tasks and computing are executed asynchronously cannot be resolved, an overall computing delay increases because the computing execution time cannot be concealed in time for removing the dependency between the tasks.
(3) In a large-scale graph computing process, a large amount of intermediate data is generated and depended on. If the data cannot be efficiently managed, the limited memory space cannot be fully utilized, and system buffer utilization cannot be improved, memory access overheads of the system increase, and finally computing performance deteriorates.

In view of the foregoing existing technical problems, this application provides a scheduling apparatus and method, and a related device. The following provides detailed descriptions.

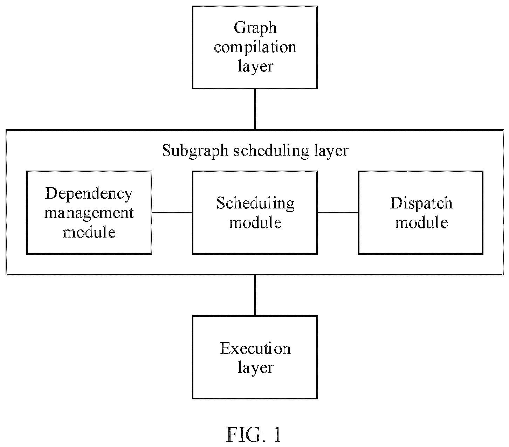

FIG. 1 is a diagram of a software architecture of a computing graph compilation and execution system according to this application. The system includes but is not limited to a graph compilation layer, a subgraph scheduling layer, and an execution layer that are separately described in the following.

### 1. Graph compilation layer

The graph compilation layer receives a computing graph from a programming front-end framework, and compiles the computing graph to obtain compiled data of the computing graph. The compiled data of the computing graph is used to execute the computing graph, and may include all data required for executing the computing graph.

The graph compilation layer first performs subgraph segmentation on the computing graph, to segment the computing graph into a plurality of subgraphs. The graph compilation layer creates a subgraph task (subgraph task, SGT) for each subgraph. Each SGT includes one or more node subtasks (node subtask, NST), and the NST may be a task like computing or communication. Further, the graph compilation layer may segment each NST into one or more thread subtasks (thread subtask, TST), and the TST is a task that can be independently scheduled and that has a finer granularity than the NST. In addition, the graph compilation layer may construct a control dependency between the TSTs in the subgraph, and construct a data dependency between the TST and the data based on input data and output data of the TST.

The graph compilation layer can construct a descriptor (SQE) of a task in a specified format for the TST. The descriptor of the TST is a description for the TST, and is used to describe information like a TST control dependency, a TST data dependency, a TST execution code pointer, and a memory address of the input data during TST execution. For data consumed or produced by the TST, that is, the input data or the output data of the TST, the graph compilation layer may construct a descriptor of the data (ticket) for description. The descriptor of the data is used to trace information like a data status and an execution status of a producer TST or a consumer TST of the data. The data status is a status like whether the data is ready for use or whether use of the data is completed. The producer TST of the data means that the output data includes all or a part of TSTs of the data. The consumer TST of the data means that the input data includes the TST of the data.

**In** a possible implementation, the descriptor of the TST is shown in Table 1.

**Table 1 Example of a descriptor of a TST**

| successor_list | |
|---|---|
| pred_cnt_init | pred_cnt |
| otkt_list | itkt_list |
| Other task-related description fields | |

successor_list indicates an index number list of successor tasks, and records index numbers of all successor tasks of the task. An index of a task is used to identify the task. A successor task of a task is another task executed after the task, that is, another task depending on the task. In the descriptor of the TST, successor_list records index numbers of all successor TSTs (TST context IDs) of the TST. An index number of a TST may be used to identify the TST. A successor TST of a TST is another TST executed after the TST, that is, another TST depending on the TST. For ease of description, in this application, an index number of the successor task is referred to as a first index number, and the index number list of the successor task is referred to as a first index number list.

pred_cnt indicates a count of uncompleted predecessor tasks, and records a quantity of predecessor tasks whose execution is uncompleted. A predecessor task of a task is another task executed before the task, that is, another task on which the task depends. In the descriptor of the TST, pred_cnt records a quantity of uncompleted predecessor TSTs of the TST. The predecessor TST is another TST executed before the TST, that is, another TST on which the TST depends. When the count of uncompleted predecessor tasks is zero, that is, when a count of predecessor TSTs of the TST is zero, it indicates that a control dependency of the TST is removed or the control dependency of the TST does not exist. The TST is a ready TST, and can be scheduled for execution. For ease of description, in this application, the count of uncompleted predecessor tasks is referred to as a first count.

pred_cnt_init indicates a count of initial predecessor tasks, and records a total quantity of predecessor tasks. In the descriptor of the TST, pred_cnt_init records a total quantity of predecessor TSTs of the TST. When the count of initial predecessor tasks is zero, that is, when the total quantity of predecessor TSTs of the TST is zero, it indicates that the control dependency of the TST does not exist initially. The TST is an initially ready TST, and can be directly scheduled for execution. For ease of description, in this application, the count of initial predecessor tasks is referred to as an initial value of the first count.

itkt_list indicates an index number (ticket context ID) list of input data, of the TST, on which data lifecycle management needs to be performed, and records an index number of the input data, of the TST, on which data lifecycle management needs to be performed. An index number of data may be used to identify the data. It should be noted that itkt_list may include only a part of the input data of the TST, and does not need to include all input data of the TST. The part of the input data of the TST is a part of data, of all the input data of the TST, on which data lifecycle management needs to be performed. For ease of description, in this application, the input data, of the TST, on which data lifecycle management needs to be performed is referred to as target input data of the TST, the index number of the input data, of the TST, on which data lifecycle management needs to be performed is referred to as a second index number, and the index number list of the input data, of the TST, on which data lifecycle management needs to be performed is referred to as a second index number list.

otkt_list indicates an index number list of output data, of the TST, on which data lifecycle management needs to be performed, and records an index number of the output data, of the TST, on which data lifecycle management needs to be performed. It should be noted that otkt_list may include only a part of the output data of the TST, and does not need to include all output data of the TST. The part of the output data of the TST is a part of data, of all the output data of the TST, on which data lifecycle management needs to be performed. For ease of description, in this application, the output data, of the TST, on which data lifecycle management needs to be performed is referred to as target output data, the index number of the output data, of the TST, on which data lifecycle management needs to be performed is referred to as a third index number, and the index number list of the output data, of the TST, on which data lifecycle management needs to be performed is referred to as a third index number list.

The other task-related description fields mainly describe a type of the task, a memory address of the input data of the task, a size of the task, an address of an instruction, configuration information of prefetched input data, and the like. In the descriptor of the TST, the other task-related description fields may include a type of the TST, the memory address of the input data of the TST, a size of the TST, the execution code pointer of the TST, an execution unit of the TST, a priority of the TST, and the like.

In a possible implementation, the descriptor of the data is shown in Table 2.

**Table 2 Example of a descriptor of data**

| | |
|---|---|
| cons_cnt_init | cons_cnt |
| prod_cnt_init | prod_cnt |
| cons_list | |
| Other data-related description fields | |

cons_cnt indicates a count of uncompleted consumer TSTs of the data, and records a quantity of consumer TSTs, of the data, whose execution is uncompleted. The consumer TST of the data means that the input data includes the data. For ease of description, in this application, the count of uncompleted consumer TSTs of the data is referred to as a second count.

prod_cnt indicates a count of uncompleted producer TSTs of the data, and records a quantity of producer TSTs, of the data, whose execution is uncompleted. A part or all of output data of the producer TST of the data is used to constitute the data, or the data includes the part or all of the output data of the producer TST of the data. For ease of description, in this application, the count of uncompleted producer TSTs of the data is referred to as a third count.

cons_cnt_init indicates a count of initial consumer TSTs of the data, and records a total quantity of consumer TSTs of the data. For ease of description, in this application, the count of initial consumer TSTs of the data is referred to as an initial value of the second count.

prod_cnt_init indicates a count of initial producer TSTs of the data, and records a total quantity of producer TSTs of the data. For ease of description, in this application, the count of initial producer TSTs of the data is referred to as an initial value of the third count.

cons_list indicates an index number list of the consumer TST of the data, and records an index number of the consumer TST of the data. For ease of description, in this application, the index number of the consumer TST of the data is referred to as a fourth index number, and the index number list of the consumer TST of the data is referred to as a fourth index number list.

The other data-related description fields mainly describe an address of the data, a size of the data, and the like. It should be noted that the descriptor of the data is only description of some information of the data, and points to real data content via a data address field in the descriptor of the data.

It should be noted that the TST may be segmented into one or more block subtasks (block subtask, BST). The BST is a task with a finer granularity than the TST, and the BST is a minimum unit of a task that is actually executed on an execution unit. BSTs obtained by segmenting a same TST may be executed on one or more execution units.

In a possible implementation, the descriptor of the TST may further include a BLK DIM field, and the BLK DIM field indicates a quantity of BSTs included in the TST.

In a possible implementation, in a process of obtaining the TST through compilation, the graph compilation layer may further generate a cache management operation (cache management operation, CMO) task for the TST. The CMO task indicates to perform a cache management operation on the input data or the output data of the TST. The CMO task indicates the following cases: (1) performing a prefetch operation on the input data of the TST; (2) performing a write-back operation on the output data of the TST; (3) invalidating the input data or the output data of the TST; and (4) refreshing the input data or the output data of the TST. For all TSTs obtained by compiling a computing graph, a CMO task is generated only for a TST that data lifecycle management needs to be performed on input data or output data of the TST, rather than a CMO task being separately generated for all the TSTs.

It should be understood that for a descriptor of the CMO task, refer to the descriptor of the TST. Details are not described herein again. In addition, the descriptor of the CMO task may also include a BLK DIM field, and the BLK DIM field indicates a quantity of BSTs included in the CMO task. For ease of description, in this application, the quantity of BSTs included in the TST or the CMO task is referred to as a target quantity.

For ease of description, in this application, the TST or the CMO task is collectively referred to as a target task.

### 2. Subgraph scheduling layer

Dependency management and specific scheduling are performed, at the subgraph scheduling layer, on the TST or the CMO task obtained through compilation at the graph compilation layer. The subgraph scheduling layer includes a dependency management module, a scheduling module, and a dispatch module that are described in the following.

### (1) Dependency management module

The dependency management module controls a dependency between a computing task and related data. Functions implemented by the dependency management module include at least the following two types:
a first type: control dependency management (control dependency management, CDM): managing a direct dependency between the TSTs and a direct dependency between the TST and the CMO task; and
a second type: data lifecycle management (data lifecycle management, DLCM): managing, via producer and consumer models between the TSTs and the data, a data lifecycle, and performing a corresponding resource operation like the cache management operation.

### (2) Scheduling module

The scheduling module receives the ready TST or the ready CMO task from the dependency management module, and schedules the ready TST or the ready CMO task to the dispatch module based on a given scheduling policy, thereby implementing scheduling management of the ready TST or the ready CMO task. The ready CMO task is a CMO task whose control dependency is removed or the control dependency of the CMO task does not exist.

In a possible implementation, the scheduling module schedules the ready TST or the ready CMO task via a ready queue (ready queue). Specifically, the scheduling module may cache the ready TST or the ready CMO task via the ready queue, and deliver, in a specific scheduling mode, the ready TST or the ready CMO task in the ready queue to the dispatch module for dispatching.

The scheduling module has a plurality of ready queues, and a ready target task may be cached in the plurality of ready queues. The scheduling module may classify received target tasks into different categories. As described above, a descriptor of the target task includes: a task type of the target task, a priority of the target task, and an execution unit of the target task. The scheduling module classifies the received target tasks into different categories based on task types of the target tasks, priorities of the target tasks, and execution units of the target tasks. In addition, the scheduling module may put different types of target tasks into different ready queues. For example, the scheduling module caches the target tasks of different task types in different ready queues, caches the target tasks of different priorities in different ready queues, or caches the target tasks executed by different execution units in different ready queues. For ease of description, in this application, the task type, the priority, the execution unit, and the like are referred to as task attributes.

The target tasks may be classified into a plurality of levels based on task types. Details are as follows:
(1) level-1 classification: the target tasks include the TST and the CMO task;
(2) level-2 classification: the TSTs include TSTs of computing and communication types, and the CMO tasks include CMO tasks of prefetching, invalidation, write-back, and refreshing types; and
(3) level-3 classification: the TSTs of the computing type include TSTs of addition, subtraction, multiplication, and division types.

It should be understood that when the target task is classified based on the task type, a specific level to which the target task is classified is determined based on an actual requirement. This is not specifically limited in this application.

For example, the target tasks of different task types may be placed in different ready queues. In this way, the target tasks of different task types may be scheduled in parallel, to avoid a queue head blocking problem of the target tasks of different task types. For example, different TSTs and CMO tasks may be separately placed in different ready queues. In this way, the TST and the CMO task may be scheduled in parallel, thereby avoiding queue head blocking problems of the TST and the CMO task.

For example, the target tasks executed by different execution units may be placed in different ready queues. In this way, the target tasks executed by different execution units may be scheduled in parallel, to avoid a queue head blocking problem of the target tasks executed by different execution units.

For example, the target tasks of different priorities may be placed in different ready queues. In this way, priority scheduling of the target tasks of different task types can be implemented.

For example, target tasks of a same task type may be classified into a plurality of priorities, and the target tasks of different priorities of the same task type are placed in different ready queues. In this way, priority scheduling of the target tasks of the same task type can be implemented.

For example, a plurality of ready queues support exclusive or shared buffer space, a depth of each ready queue is not limited, and back pressure is performed when a total quantity of tasks exceeds a depth of the buffer space. In this application, the depth of the buffer space can be flexibly configured.

For example, each ready queue supports a plurality of scheduling modes, including but not limited to first in first out, breadth first, depth first, and the like.

It should be understood that, that the scheduling module schedules the ready target task via the ready queue is merely one implementation of this application, and an actually supported scheduling manner is not limited thereto.

It should be noted that the scheduling module may further perform priority-based scheduling on ready queues corresponding to different categories, to schedule the TST or the CMO task in the ready queue as a to-be-executed TST or a to-be-executed CMO task to the dispatch module.

### (3) Dispatch module

The dispatch module receives the to-be-executed TST or the to-be-executed CMO task from the scheduling module, and allocates the execution unit based on a specific policy. The dispatch module may dispatch BSTs in the to-be-executed TST or the to-be-executed CMO task to different execution units for execution, and after receiving that execution of all the BSTs is completed, determine that execution of the TST or the CMO task is completed.

In a possible implementation, the dispatch module may dispatch the to-be-executed TST or the to-be-executed CMO task via a dispatch queue (dispatch queue).

The dispatch module has a plurality of dispatch queues, and the plurality of dispatch queues may cache the to-be-executed TST and the to-be-executed CMO task. The dispatch module may place received TSTs or to-be-executed CMO tasks in different dispatch queues based on the task types. The dispatch module may alternatively read the to-be-executed TST or the to-be-executed CMO task from the dispatch queue, and dispatch the to-be-executed TST or the to-be-executed CMO task to a corresponding execution unit based on the task type.

Each dispatch queue supports the first in first out scheduling mode.

For example, each type of TST or CMO task has an independent dispatch queue, and a depth is configurable, to prevent queue heads of heterogeneous tasks from being blocked.

It should be noted that, that the dispatch module dispatches the to-be-executed TST or the to-be-executed CMO task via the dispatch queue is only one implementation of this application, and an actually supported dispatch manner is not limited thereto.

In a possible implementation, in a process of dispatching the TST, the dispatch module reads the descriptor of the TST, and segments the TST into one or more BSTs based on the read descriptor of the TST. Specifically, the dispatch module reads the target quantity in the descriptor of the TST, and segments the TST into the one or more BSTs based on the read target quantity. The dispatch module dispatches the one or more BSTs to corresponding execution units for execution. After execution of all the BSTs in the TST is completed, the dispatch module returns a completion queue entry (CQE) via a completion queue to notify the dependency management module to process the completion event. Similarly, in a process of dispatching the CMO task, the dispatch module reads a descriptor of the CMO task, and segments the CMO task into one or more BSTs based on the read descriptor of the CMO task. Specifically, the dispatch module reads the target quantity in the descriptor of the CMO task, and segments the CMO task into the one or more BSTs based on the read target quantity. The dispatch module dispatches the one or more BSTs to corresponding execution units for execution. After execution of all the BSTs in the CMO task is completed, the dispatch module returns a completion queue entry (CQE) via a completion queue to notify the dependency management module to process the completion queue entry.

The dispatch module may dispatch, based on the target quantity in the descriptor of the TST or the CMO task, all the BSTs included in the TST or the CMO task to execution units of the target quantity for parallel execution. Alternatively, the dispatch module may allocate the execution units based on idle states of the execution units, to dispatch the BSTs in batches until execution of all the BSTs included in the TST or the CMO task is completed.

In a possible implementation, the dispatch module may generate a CMO task for prefetching the target input data of the TST. When the descriptor of the TST includes configuration information for prefetching the target input data, the dispatch module may generate, for the TST, the CMO task for prefetching the target input data, and dispatch the CMO task for prefetching the target input data to a corresponding execution unit for execution. Prefetching the target input data of the TST in advance reduces a data access delay during execution. An advance for prefetching the target input data can be configured by software, and a cancellation mechanism is supported. It should be noted that the CMO task for prefetching the target input data that is generated by the dispatch module is managed by the dispatch module, and a completion queue entry of the CMO task is not sent to the dependency management module.

### 3. Execution layer

The execution layer includes different types of execution units, that is, the execution layer includes heterogeneous execution units. The different types of execution units are responsible for executing TSTs or CMO tasks of corresponding task types. After executing a received task, each execution unit returns a task execution result to the dispatch module. A granularity of the task executed by each execution unit each time is the BST.

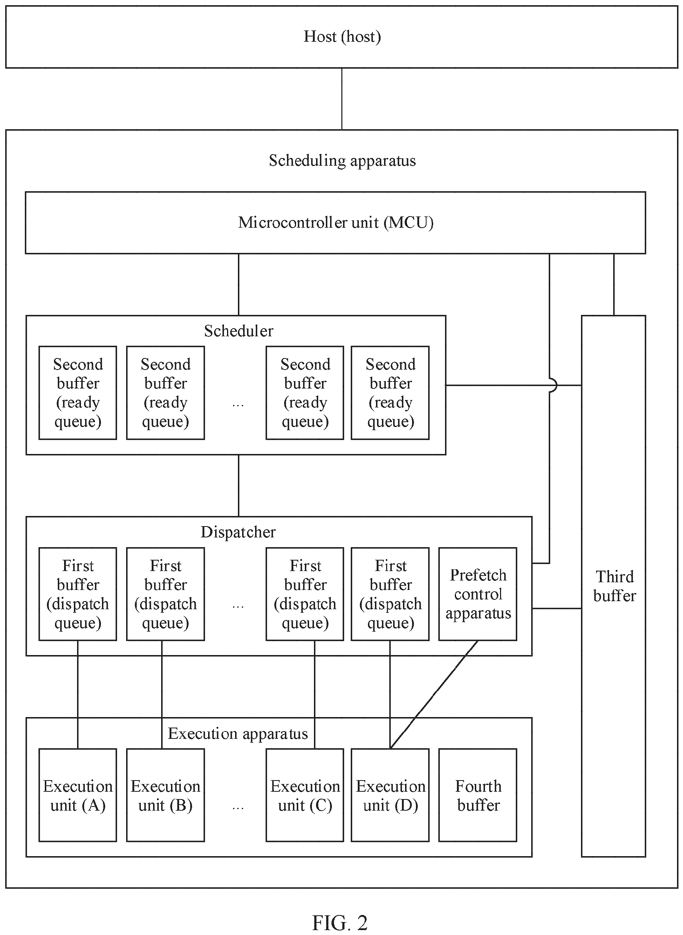

FIG. 2 is a diagram of a hardware architecture of a computing graph compilation and execution system according to this application. The system includes a host (host) and a scheduling apparatus. The host may implement a function of the graph compilation layer of the software architecture shown in FIG. 1, and the scheduling apparatus may implement a function of the subgraph scheduling layer of the software architecture shown in FIG. 1. For details, refer to the description of the embodiment shown in FIG. 1. The scheduling apparatus includes but is not limited to a scheduler, a dispatcher, a microcontroller unit (microcontroller unit, MCU), and a third buffer.

The third buffer may be a cache (cache). The third buffer is configured to cache a descriptor of a TST, a descriptor of a CMO task, and descriptors of data (including a descriptor of target input data of the TST and a descriptor of target output data of the TST), to reduce an access delay of a task. In addition to supporting a common read/write operation, the third buffer further supports atomic operations such as an operation of subtracting one and a reset operation that are performed on a specific field (for example, the field in the descriptor of the TST shown in Table 1 and the field in the descriptor of the data shown in Table 2), to accelerate an operation performed by the scheduling apparatus on the descriptor, and reduce the access delay.

The MCU may implement a function of the dependency management module at the subgraph scheduling layer. Specifically, the MCU controls execution of an entire subgraph task (SGT), including but not limited to dependency management in the subgraph, a conditional redirection, and loop control, and sends a ready TST or a ready CMO task to the scheduler.

In a possible implementation, a process in which the MCU performs control dependency management includes the following: (1) After execution of a TST or a CMO task is completed, a first index number list (successor_list) in a descriptor of the TST or a descriptor of the CMO task is read from the third buffer. (2) All successor tasks of the TST or the CMO task are determined based on first index numbers in the first index number list, and the third buffer is notified to subtract one from a first count (pred_cnt) in a descriptor of each successor task. (3) For any successor task of the TST or the CMO task, when the first count in the descriptor of the successor task is decreased to zero, the successor task is sent to the scheduler. It should be understood that successor tasks of a TST or a CMO task include a successor TST and a successor CMO task.

In a possible implementation, a process in which the MCU performs data lifecycle management includes the following: (1) After execution of a TST is completed, a second index number list (itkt_list) and a third index number list (otkt_list) in a descriptor of the TST are read from the third buffer. (2) All target input data of the TST is determined based on the second index number in the second index number list, and the third buffer is notified to subtract one from a second count (cons _cnt) in a descriptor of each piece of target input data. The target input data of the TST is input data on which data lifecycle management needs to be performed in the TST. (3) For any piece of target input data of the TST, when a second count in a descriptor of the target input data is decreased to zero, it indicates that the target input data is in an idle state, that is, consumption of the target input data is completed and the target input data may be discarded. In this case, the target input data may be invalidated (invalidated), to discard the target input data and release a corresponding buffer. For example, a CMO task for invalidating the target input data is delivered to the scheduler, to invalidate the target input data. (4) All target output data of the TST is determined based on the third index number in the third index number list, and the third buffer is notified to subtract one from a third count (prod _cnt) in a descriptor of each piece of target output data. The target output data of the TST is output data on which data lifecycle management needs to be performed in the TST. (5) For any piece of target output data of the TST, when a third count in a descriptor of the target output data is decreased to zero, it indicates that the target output data is in a ready state, that is, production of the target output data has been completed and can be consumed. In this case, a write-back (write-back) operation may be selectively performed on the target output data, and the target output data is written to a memory of the host. For example, a CMO task for writing back the target output data is delivered to the scheduler, to write the target output data to the memory of the host.

The scheduler may implement a function of the scheduling module at the subgraph scheduling layer. The scheduler includes a plurality of second buffers, and the second buffer may be a cache. One ready queue exists in each second buffer, and each ready queue is used to cache a ready TST (including an initially ready TST) or a ready CMO task (including an initially ready CMO task).

The dispatcher may implement a function of the dispatch module at the subgraph scheduling layer. The dispatcher includes a plurality of first buffers, and the first buffer may be a cache. One dispatch queue exists in each first buffer, and each dispatch queue is used to cache a to-be-executed TST or a to-be-executed CMO task.

Optionally, the dispatcher further includes a prefetch control apparatus. The prefetch control apparatus may generate a CMO task for prefetching input data of a TST. When a descriptor of the TST includes configuration information for prefetching the input data, the dispatch module may generate, for the TST, the CMO task for prefetching the input data, and dispatch the CMO task for prefetching the input data to an execution apparatus for execution.

The system shown in FIG. 2 may further include the execution apparatus, and the execution apparatus may implement a function of the execution layer of the software architecture shown in FIG. 1. Optionally, the scheduling apparatus may further include the execution apparatus, or the scheduling apparatus may not include the execution apparatus. When the scheduling apparatus does not include the execution apparatus, the execution apparatus is hardware that is independent of and that communicates with the scheduling apparatus. In FIG. 2, an example in which the scheduling apparatus includes the execution apparatus is used for description.

The execution apparatus includes a plurality of heterogeneous execution units and a fourth buffer. The fourth buffer may be a cache. The plurality of execution units share the fourth buffer. The fourth buffer is configured to cache the input data, output data, and the like of the TST. For example, the scheduling apparatus may prefetch the input data of the TST, and cache the input data of the TST in the fourth buffer for use when the TST is executed. For another example, the scheduling apparatus may cache the output data of the TST in the fourth buffer for use when another TST is executed.

The plurality of execution units include different types of computing units or communication units, and specifically include but are not limited to a graphics processing unit (GPU), a dedicated accelerator, a direct memory access (direct memory access, DMA) controller, and the like. For example, in FIG. 2, four types of execution units: an execution unit A, an execution unit B, an execution unit C, and an execution unit D are used as an example, and a quantity of execution units of each type may be two. The execution unit A, the execution unit B, the execution unit C, and the execution unit D are heterogeneous execution units. It should be understood that in this application, a type and a quantity of execution units can be flexibly configured, there is no binding relationship between types of execution units, and there is no binding relationship between quantities of execution units. It should be noted that, for different execution units in the execution apparatus, this application provides a communication mechanism fully implemented by hardware, and the execution units may communicate with each other.

It should be further noted that there is a correspondence between the plurality of execution units and the plurality of first buffers. The dispatcher dispatches the to-be-executed TST or the to-be-executed CMO task cached by each first buffer to an execution unit corresponding to the first buffer. It should be understood that different first buffers cache different dispatch queues, and to-be-executed TSTs or to-be-executed CMO tasks of different task types are cached in different dispatch queues, to dispatch the to-be-executed TSTs or the to-be-executed CMO tasks of different task types to different execution units. In this way, in this application, the TSTs or the CMO tasks of different task types are allocated to different execution units in parallel, thereby improving scheduling efficiency and execution efficiency.

It should be noted that, for function descriptions of the modules in the embodiment shown in FIG. 2, refer to related descriptions in the embodiment shown in FIG. 1. Details are not described herein again.

For ease of understanding this application, the following further describes the modules of the system shown in FIG. 2 by using an information flow direction.

After obtaining compiled data through compilation, the host stores the compiled data in the memory of the host. The compiled data includes the TST, the descriptor of the TST, and the descriptors of the data (including the descriptor of the target input data of the TST and the descriptor of the target output data of the TST), the CMO task, the descriptor of the CMO task, and the like.

After the compiled data is stored in the memory of the host, the host sends, to the scheduling apparatus, a notification of executing the compiled data. For example, the host sends the notification of executing the compiled data to the scheduling apparatus, to notify the scheduling apparatus that the compiled data is stored in the memory of the host. The scheduling apparatus may obtain the compiled data from the memory of the host, and execute the compiled data.

It should be understood that execution of one SGT includes execution of one or more TSTs, and may further include execution of one or more CMO tasks. An initially ready TST exists in the one or more TSTs, and the initially ready TST is a TST whose initial value (pred_cnt_init) of a first count is zero. In addition, an initially ready CMO task may exist in the one or more CMO tasks, and the initially ready CMO task is a CMO task whose initial value of a first count is zero.

In a possible implementation, the notification of executing the compiled data may include information in the descriptor of the TST and information in the descriptor of the CMO task. The information in the descriptor of the TST is used by the scheduling apparatus to determine the initially ready TST in the compiled data, and the information in the descriptor of the CMO task is used by the scheduling apparatus to determine the initially ready CMO task in the compiled data.

Specifically, the host notifies the MCU in the scheduling apparatus to execute the compiled data. After receiving, from the host, the notification of executing the compiled data, the MCU notifies the third buffer to obtain and cache a descriptor of the initially ready TST and a descriptor of the initially ready CMO task from the memory of the host. After the third buffer caches the descriptor of the initially ready TST, the MCU reads the descriptor of the initially ready TST from the third buffer, to determine that the descriptor of the initially ready TST is the initially ready TST, obtains the initially ready TST from the memory of the host, and sends the initial ready TST to the scheduler. Similarly, after the third buffer caches the descriptor of the initially ready CMO task, the MCU reads the descriptor of the initially ready CMO task from the third buffer, to determine that the descriptor of the initially ready CMO task is the initially ready CMO task, obtains the initially ready CMO task from the memory of the host, and sends the initial ready CMO task to the scheduler.

It should be noted that the MCU may send a plurality of target tasks to the scheduler in parallel. The plurality of target tasks are all initially ready target tasks. Any one of the plurality of target tasks may be a TST or a CMO task.

It should be further noted that, as the initially ready TST or the initially ready CMO task is executed, a control dependency of a non-initially ready TST needs to be removed to become a ready TST, and a control dependency of a non-initially ready CMO task needs to be removed to become a ready CMO task.

In a possible implementation, the MCU may perform control dependency management on the non-initially ready TST, to change the non-initially ready TST into the ready TST, and perform control dependency management on the non-initially ready CMO task, to change the non-initially ready CMO task into the ready CMO task.

Specifically, each time the MCU receives a notification indicating that execution of a predecessor task of a non-initially ready TST is completed, the MCU notifies the third buffer to subtract one from a first count (pred_cnt) in a descriptor of the TST. The predecessor task of the TST may be another TST or a CMO task. After the first count in the descriptor of the TST is decreased to zero, a control dependency of the TST is removed, that is, the TST becomes the ready TST. The MCU obtains the TST from the memory of the host, and sends the TST to the scheduler. Similarly, each time the MCU receives a notification indicating that execution of a predecessor task of a non-initially ready CMO task is completed, the MCU notifies the third buffer to subtract one from a first count (pred_cnt) in a descriptor of the CMO task. The predecessor task of the CMO task may be another CMO task or a TST. After the first count in the descriptor of the CMO task is decreased to zero, a control dependency of the CMO task is removed, that is, the CMO task becomes the ready CMO task. The MCU obtains the CMO task from the memory of the host, and sends the CMO task to the scheduler.

The descriptor of the non-initially ready TST is obtained and cached by the third buffer from the memory of the host in a process of scheduling, dispatching, or executing the predecessor task of the non-initially ready TST. For example, in a process of dispatching a predecessor task that is of the TST and that is first executed, the dispatcher notifies the third buffer to obtain and cache the descriptor of the TST from the memory of the host. Similarly, the descriptor of the non-initially ready CMO task is obtained and cached by the third buffer from the memory of the host in a process of scheduling, dispatching, or executing the predecessor task of the non-initially ready CMO task. For another example, in a process of dispatching a predecessor task that is of the CMO task and that is first executed, the dispatcher notifies the third buffer to obtain and cache the descriptor of the CMO task from the memory of the host.

It should be noted that the MCU may send a plurality of target tasks to the scheduler in parallel. The plurality of target tasks are all ready target tasks. Any one of the plurality of target tasks may be a TST or a CMO task.

The scheduler may receive the TST and the CMO task from the MCU. TSTs received by the scheduler includes the initial ready TST and the ready TST. Similarly, CMO tasks received by the scheduler includes the initial ready CMO task and the ready CMO task. The scheduler caches each received TST in one of the plurality of second buffers, and caches each received CMO task in one of the plurality of second buffers. Specifically, each received TST is cached in a ready queue in the one of the plurality of second buffers, and each received CMO task is cached in a ready queue in the one of the plurality of second buffers.

In a possible implementation, for each received TST, the scheduler caches the TST in a ready queue in one of the plurality of second buffers based on a task attribute of the TST. Similarly, for each received CMO task, the scheduler caches the CMO task in a ready queue in one of the plurality of second buffers based on a task attribute of the CMO task. The task attribute includes a task type, a priority, and an execution unit.

It should be understood that before the MCU sends the TST or the CMO task to the scheduler, the third buffer already caches the descriptor of the TST or the descriptor of the CMO task. For the initially ready TST or the initially ready CMO task, the MCU notifies the third buffer to obtain and cache the descriptor of the TST or the CMO task. For the non-initially ready TST or the non-initially ready CMO task, the dispatcher notifies the third buffer to obtain and cache the descriptor of the TST or the CMO task. Therefore, for any TST or any CMO task cached by any second buffer, the scheduler may read a descriptor of the TST or the CMO task from the third buffer.

In a possible implementation, for the TST cached by the second buffer, the scheduler may read the descriptor of the TST from the third buffer, and notify, based on the descriptor of the TST, the third buffer to obtain and cache a descriptor of target input data of the TST. Specifically, the descriptor of the TST includes a second index number list, the second index number list includes a second index number, and the second index number is used to identify the target input data of the TST. The scheduler obtains the second index number from the third buffer, and notifies, based on the second index number, the third buffer to prefetch the descriptor of the target input data of the TST. For example, when the TST exits the ready queue in the second buffer, the scheduler notifies the third buffer to obtain and cache the descriptor of the target input data of the TST. It should be understood that when the dispatcher generates a CMO task for prefetching the target input data of the TST, and when the MCU performs data lifecycle management on the target input data of the TST, the descriptor of the target input data of the TST needs to be used. In this way, when the dispatcher needs to use the descriptor of the target input data of the TST, and when the MCU needs to use the descriptor of the target input data of the TST, the descriptor of the target input data of the TST has been cached in the third buffer, thereby improving a hit ratio of the buffer.

The scheduler further sends the TST cached in the ready queue as the to-be-executed TST to the dispatcher, and sends the CMO task cached in the ready queue as the to-be-executed CMO task to the dispatcher. It should be noted that the scheduler may send a plurality of target tasks to the dispatcher in parallel. Any one of the plurality of target tasks may be a TST or a CMO task. For example, the scheduler obtains one TST or one CMO task from each of the plurality of second buffers, to obtain a plurality of target tasks, and sends the plurality of target tasks to the dispatcher.

The dispatcher may receive the to-be-executed TST or the to-be-executed CMO task from the scheduler. In addition, the dispatcher caches each received TST in one of the plurality of first buffers, and caches each received CMO task in one of the plurality of first buffers. Specifically, the dispatcher caches each received TST in a dispatch queue in one of the plurality of first buffers, and caches each received CMO task in a dispatch queue in one of the plurality of first buffers.

In a possible implementation, for each received TST, the dispatcher caches the TST in a dispatch queue in one of the plurality of first buffers based on a task type of the TST. Similarly, for each received CMO task, the dispatcher caches the CMO task in a dispatch queue in one of the plurality of first buffers based on a task type of the CMO task.

In a possible implementation, for any TST cached by any first buffer, the prefetch control apparatus in the dispatcher may obtain a descriptor of target input data of the TST from a third buffer, generate, based on the descriptor of the target input data of the TST, a CMO task for prefetching the target input data of the TST, and dispatch the CMO task for prefetching the target input data of the TST to a corresponding execution unit for execution. The scheduler notifies, in advance, the third buffer to obtain and cache the descriptor of the target input data of the TST. As shown in FIG. 2, the prefetch control apparatus dispatches the CMO task for the target input data of the TST to an execution unit D for execution. The execution unit D may be the DMA controller. The execution unit D executes the CMO task for prefetching the target input data of the TST, obtains the target input data of the TST from the memory of the host, and caches the target input data of the TST in the fourth buffer. When the execution unit executes the TST, the target input data of the TST has been cached in the fourth buffer, and the execution unit may directly obtain the target input data of the TST from the fourth buffer. In this way, in this application, data that needs to be used can be prefetched, thereby effectively improving the hit ratio of the buffer and reducing a data obtaining delay.

In a possible implementation, for any TST cached by any first buffer, the dispatcher may read a descriptor of the TST from the third buffer, and notify, based on the descriptor of the TST, the third buffer to prefetch a descriptor of a successor task of the TST. Specifically, the descriptor of the TST includes a first index number list, the first index number list includes a first index number, and the first index number is used to identify the successor task of the TST. The dispatcher reads the first index number from the third buffer, and notifies, based on the first index number, the third buffer to prefetch the descriptor of the successor task of the TST. It should be understood that the successor task of the TST may be another TST or a CMO task. In this way, when the MCU performs control dependency management on the successor task of the TST, the descriptor of the successor task of the TST has been cached in the third buffer, so that a delay of reading the descriptor of the successor task of the TST by the MCU can be reduced, and a hit rate for the MCU to read the descriptor of the successor task of the TST can be improved. Similarly, for any CMO task cached by any first buffer, the dispatcher may read a descriptor of the CMO task from the third buffer, and notify, based on the descriptor of the CMO task, the third buffer to prefetch a descriptor of a successor task of the CMO task. Specifically, the descriptor of the CMO task includes a first index number list, the first index number list includes a first index number, and the first index number is used to identify the successor task of the CMO task. The dispatcher reads the first index number from the third buffer, and notifies, based on the first index number, the third buffer to prefetch the descriptor of the successor task of the CMO task. It should be understood that the successor task of the CMO task may be another CMO task or a TST. In this way, when the MCU performs control dependency management on the successor task of the CMO task, the descriptor of the successor task of the CMO task has been cached in the third buffer, so that a delay of reading the descriptor of the successor task of the CMO task by the MCU can be reduced, and a hit rate for the MCU to read the descriptor of the successor task of the CMO task can be improved.

In a possible implementation, for any TST cached by any first buffer, the dispatcher may obtain a descriptor of the TST from the third buffer, and notify, based on the descriptor of the TST, the third buffer to prefetch a descriptor of target output data of the TST. Specifically, the descriptor of the TST includes a third index number list, the third index number list includes a third index number, and the third index number is used to identify the target output data of the TST. The dispatcher obtains the third index number from the third buffer, and notifies, based on the third index number, the third buffer to prefetch the descriptor of the target output data of the TST. It should be understood that when the MCU performs data lifecycle management on the target output data of the TST, the descriptor of the target output data of the TST needs to be used. In this way, when the MCU needs to use the descriptor of the target output data of the TST, the descriptor of the target output data of the TST has been cached in the third buffer, thereby improving a hit ratio of the buffer.

The dispatcher further dispatches the TST cached in the dispatch queue to the execution apparatus, and dispatches the CMO task cached in the dispatch queue to the execution apparatus. It should be noted that the dispatcher may send a plurality of target tasks to the execution apparatus in parallel. Any one of the plurality of target tasks may be a TST or a CMO task. For example, the dispatcher obtains one TST or one CMO task from each of the plurality of first buffers, to obtain a plurality of target tasks, and sends the plurality of target tasks to the execution apparatus.

In a possible implementation, the descriptor of the TST includes a target quantity (BLK DIM), and the target quantity indicates a quantity of BSTs included in the TST. For any TST cached by any first buffer, a process in which the dispatcher dispatches the TST to the execution apparatus is as follows: reading a target quantity in a descriptor of the TST from the third buffer, segmenting the TST into BSTs of the target quantity, and dispatching the BSTs of the target quantity to corresponding execution units. Similarly, the descriptor of the CMO task also includes a target quantity, and the target quantity indicates a quantity of BSTs included in the CMO task. For any CMO task cached by any first buffer, a process in which the dispatcher dispatches the CMO task to the execution apparatus is as follows: reading a target quantity in a descriptor of the CMO task from the third buffer, segmenting the CMO task into BSTs of the target quantity, and dispatching the BSTs of the target quantity to corresponding execution units. In this way, one TST or one CMO task is segmented into a plurality of BSTs, and the plurality of BSTs may be dispatched to a plurality of execution units for execution, thereby improving a degree of parallelism of execution and reducing an execution delay.

In a possible implementation, after completing execution of any BST, the execution unit sends, to the dispatcher, a notification indicating that execution of the BST is completed. In addition, if output data exists in the BST, the execution unit further caches the output data of the BST in the fourth buffer. It should be understood that one TST includes a plurality of BSTs, and the execution unit caches output data of each BST in the fourth buffer, to cache output data of the TST in the fourth buffer.

It should be noted that, for the CMO task generated by the dispatcher, the dispatcher may also segment the CMO task into one or more BSTs, and send the one or more BSTs to the execution apparatus.

In a possible implementation, for any TST or any CMO task, after the dispatcher receives a notification indicating that execution of all BSTs of the TST or the CMO task is completed, the dispatcher determines that execution of the TST or the CMO task is completed, and sends a notification to the MCU, indicating that execution of the TST or the CMO task is completed.

In a possible implementation, after receiving a notification indicating that execution of any TST is completed, the MCU reads a descriptor of the TST from the third buffer, and performs control dependency management on a successor task of the TST based on the descriptor of the TST. Specifically, the descriptor of the TST includes a first index number list, the first index number list includes a first index number, and the first index number is used to identify the successor task of the TST. A process in which the MCU performs control dependency management on the successor task of the TST is as follows: (1) The MCU reads the first index number from the third buffer. (2) The MCU notifies, based on the first index number, the third buffer to subtract one from a first count in a descriptor of the successor task of the TST. As described above, the dispatcher notifies, in advance, the third buffer to obtain and cache the descriptor of the successor task of the TST from the memory of the host. (3) When the first count in the descriptor of the successor task of the TST is decreased to zero, the MCU sends the successor task of the TST to the scheduler. It should be understood that a control dependency of the successor task of the TST is removed, that is, the successor task of the TST becomes a ready task, and then the MCU may send the successor task of the TST to the scheduler. Similarly, after receiving a notification indicating that execution of any CMO task is completed, the MCU reads a descriptor of the CMO task from the third buffer, and performs control dependency management on a successor task of the CMO task based on the descriptor of the CMO task. Specifically, the descriptor of the CMO task includes a first index number list, the first index number list includes a first index number, and the first index number is used to identify the successor task of the CMO task. A process in which the MCU performs control dependency management on the successor task of the CMO task is as follows: (1) The MCU reads the first index number from the third buffer. (2) The MCU notifies, based on the first index number, the third buffer to subtract one from a first count in a descriptor of the successor task of the CMO task. As described above, the dispatcher notifies, in advance, the third buffer to obtain and cache the descriptor of the successor task of the CMO task from the memory of the host. (3) When the first count in the descriptor of the successor task of the CMO task is decreased to zero, the MCU sends the successor task of the CMO task to the scheduler. It should be understood that a control dependency of the successor task of the CMO task is removed, that is, the successor task of the CMO task becomes a ready task, and then the MCU may send the successor task of the CMO task to the scheduler. In this way, in this application, control dependency management of the TST or the CMO task is completed by the MCU, a more flexible and changeable function of the control dependency management is provided, and a problem of poor adaptability of the scheduling apparatus is avoided. In a complex and changeable service scenario, this effectively improves a fit degree between the system and an application scenario, and reduces costs.

In a possible implementation, after receiving a notification indicating that execution of any TST is completed, the MCU reads a descriptor of the TST from the third buffer, and performs data lifecycle management on target input data of the TST based on the descriptor of the TST. Specifically, the descriptor of the TST includes a second index number list, the second index number list includes a second index number, and the second index number is used to identify the target input data of the TST. A process in which the MCU performs data lifecycle management on the target input data of the TST is as follows: (1) The MCU reads the second index number from the third buffer. (2) The MCU notifies, based on the second index number, the third buffer to subtract one from a second count in a descriptor of the target input data of the TST. As described above, the scheduler notifies, in advance, the third buffer to obtain and cache the descriptor of the target input data of the TST from the memory of the host. (3) When the second count in the descriptor of the target input data of the TST is decreased to zero, the MCU sends, to the scheduler, a CMO task indicating to invalidate the target input data of the TST. It should be understood that the CMO task is a successor task of the TST, and a control dependency of the CMO task is also removed in this case. A specific process is described above. Details are not described herein again. After the CMO task is scheduled by the scheduler and dispatched by the dispatcher, the CMO task is dispatched to the execution apparatus. For example, the CMO task is dispatched to the execution unit D, and the execution unit D invalidates the target input data of the TST. The execution unit D may be the DMA controller. In this way, in this application, lifecycle management can be performed on each piece of target input data in a subgraph, and target input data that no longer needs to be used is released, so that a hit ratio of the buffer can be effectively improved.

In a possible implementation, after receiving a notification indicating that execution of any TST is completed, the MCU reads a descriptor of the TST from the third buffer, and performs data lifecycle management on target output data of the TST based on the descriptor of the TST. Specifically, the descriptor of the TST includes a third index number list, the third index number list includes a third index number, and the third index number is used to identify the target output data of the TST. A process in which the MCU performs data lifecycle management on the target input data of the TST is as follows: (1) The MCU reads the third index number from the third buffer. (2) The MCU notifies, based on the third index number, the third buffer to subtract one from a third count in a descriptor of the target output data of the TST. As described above, the dispatcher notifies, in advance, the third buffer to obtain and cache the descriptor of the target output data of the TST from the memory of the host. (3) When the third count in the descriptor of the target output data of the TST is decreased to zero, the MCU sends, to the scheduler, a CMO task indicating to write back the target output data of the TST. It should be understood that the CMO task is a successor task of the TST, and a control dependency of the CMO task is also removed in this case. A specific process is described above. Details are not described herein again. After the CMO task is scheduled by the scheduler and dispatched by the dispatcher, the CMO task is dispatched to the execution apparatus. For example, the CMO task is dispatched to the execution unit D, the execution unit D may be the DMA controller, and the execution unit D writes, to the memory of the host, the target output data of the TST cached by the fourth buffer. As described above, the target output data of the TST is written to the fourth buffer by the execution apparatus. In this way, in this application, lifecycle management may be performed on each piece of target output data in a subgraph, and the target output data is written back to the memory of the host in time, so that storage space of the fourth buffer can be properly used.

The following further describes the scheduling apparatus in the system shown in FIG. 2 by using a specific example.

As shown in FIG. 2, the scheduling apparatus includes the dispatcher. The dispatcher is coupled to the execution apparatus, the dispatcher includes the plurality of first buffers, each of the plurality of first buffers is configured to cache target tasks of one task type, the target tasks include a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask. The dispatcher is configured to: receive a plurality of first target tasks, and cache the plurality of first target tasks in the plurality of first buffers based on task types; and dispatch a plurality of second target tasks to the execution apparatus. Any one of the plurality of second target tasks is a target task cached by the plurality of first buffers, and the plurality of second target tasks are separately cached by different first buffers. It should be noted that the scheduling apparatus in this application is coupled to the host, and the target task scheduled, dispatched, and executed in the scheduling apparatus initially comes from the memory of the host.

The target tasks may be classified into a plurality of levels based on task types. Details are as follows:
(1) level-1 classification: the target tasks include the TST and the CMO task;
(2) level-2 classification: the TSTs include TSTs of computing and communication types, and the CMO tasks include CMO tasks of prefetching, invalidation, write-back, and refreshing types; and
(3) level-3 classification: the TSTs of the computing type include TSTs of addition, subtraction, multiplication, and division types.

It should be understood that when the target task is classified based on the task type, a specific level to which the target task is classified is determined based on an actual requirement. This is not specifically limited in this application.

In this application, the scheduling apparatus used for graph computing includes the dispatcher. The dispatcher may receive target tasks of different task types in parallel, cache the received target tasks of different task types in different first buffers, and dispatch, in parallel to the execution apparatus, the target tasks of different task types cached by different first buffers. The dispatcher caches the target tasks of different task types in different first buffers, so that a queue head blocking problem during heterogeneous task dispatching can be resolved, and dispatch efficiency of the target tasks can be improved. The dispatcher dispatches the target tasks of different task types to the execution apparatus in parallel, so that a dispatch delay of the target tasks can be reduced, and the dispatch efficiency of the target tasks can be improved. Further, because the dispatcher dispatches the target tasks of different task types to the execution apparatus in parallel, the execution apparatus may alternatively execute the target tasks of different task types in parallel. For example, the execution apparatus includes different types of execution units (that is, heterogeneous execution units), and the dispatcher dispatches, in parallel, the target tasks of different task types to different types of execution units for execution, so that utilization of the execution units and execution efficiency of the target tasks can be improved. In conclusion, the scheduling apparatus provided in this application can improve graph computing efficiency. In addition, in this application, the scheduling apparatus schedules and dispatches the target task, that is, a function of scheduling and dispatching the target task is implemented by hardware. In comparison with software scheduling, software scheduling load can be reduced.

In a possible implementation, the scheduling apparatus further includes the scheduler, and the scheduler includes the plurality of second buffers. The scheduler is configured to: receive a plurality of third target tasks, and cache the plurality of third target tasks in the plurality of second buffers; and send the plurality of first target tasks to the dispatcher. Any one of the plurality of first target tasks is a target task cached by the plurality of second buffers. The target task received by the scheduler is a target task whose control dependency is removed or whose control dependency does not exist. The plurality of third target tasks are target tasks whose control dependencies are removed or whose control dependencies do not exist.

In this implementation, the scheduling apparatus further includes the scheduler. The scheduler may receive different target tasks in parallel, cache the received target tasks in the plurality of second buffers, and schedule, in parallel, the target tasks of different task types cached in the plurality of second buffers to the dispatcher. In this way, the scheduler may cache the target task whose control dependency is removed or whose control dependency does not exist, and deliver the cached target task to the dispatcher based on a specific scheduling policy, so that storage utilization of the first buffer in the dispatcher can be maximized.

In a possible implementation, each of the plurality of second buffers is configured to cache target tasks of one category, and target tasks of a same category have a same one of the following: a task type, a priority, and an execution unit.

In this implementation, a plurality of scheduling policies of the target task are provided, to improve scheduling flexibility of the target task. For example, the scheduler caches the target tasks of different task types in different second buffers, caches target tasks of different priorities in different second buffers, or caches target tasks executed by different execution units in different second buffers. In this way, the queue head blocking problem can be resolved when heterogeneous tasks are scheduled to the dispatcher, and scheduling efficiency of the target task can be improved.

In a possible implementation, the scheduling apparatus further includes the microcontroller unit MCU and the third buffer, the third buffer caches a descriptor of a fourth target task, and the fourth target task is any one of the plurality of third target tasks. The MCU is configured to: read the descriptor of the fourth target task from the third buffer, where the descriptor of the fourth target task includes a first target count, the first target count indicates a quantity of fifth target tasks whose execution is uncompleted, and the fourth target task depends on the fifth target task; and if the first target count is zero, send the fourth target task to the scheduler.

The fourth target task is any one of the plurality of third target tasks. The fifth target task is a predecessor task of the fourth target task. The first target count is a first count in the task descriptor of the fourth target task. It should be understood that, when a quantity of other target tasks on which a target task depends is zero, it indicates that the target task is the target task whose control dependency is removed or whose control dependency does not exist.

The scheduling apparatus is coupled to the host. The MCU obtains the fourth target task from the memory of the host, and sends the fourth target task to the scheduler.

In this implementation, the scheduling apparatus cooperates with the MCU and the third buffer to complete control dependency management of the target task, thereby providing a more flexible and changeable control function of the control dependency management, and avoiding the problem of the poor adaptability of the scheduling apparatus. In the complex and changeable service scenario, a fit degree between the scheduling apparatus and the application scenario can be effectively improved, and costs can be reduced.

In a possible implementation, the MCU is further configured to notify the third buffer to obtain and cache the descriptor of the fourth target task. The fourth target task may be the target task on which the control dependency does not exist. Alternatively, in other words, the fourth target task is the target task on which the control dependency is initially removed. The scheduling apparatus is coupled to the host, and the third buffer obtains the descriptor of the fourth target task from the memory of the host.

In this implementation, the MCU notifies the third buffer to prefetch the descriptor of the target task, and the third buffer locally caches the prefetched descriptor of the target task. In this way, when the MCU performs control dependency management on the target task, the descriptor of the target task has been cached in the third buffer, thereby reducing a delay of performing control dependency management on the target task.

In a possible implementation, the execution apparatus includes a plurality of execution units, the plurality of first target tasks include the fourth target task, and the plurality of second target tasks include the fourth target task. The dispatcher is specifically configured to: read the descriptor of the fourth target task from the third buffer; and if the descriptor of the fourth target task further includes a first target quantity, segment the fourth target task into first block subtasks of the first target quantity, and dispatch the first block subtasks of the first target quantity to at least one of the plurality of execution units. The first target quantity indicates a quantity of first block subtasks included in the fourth target task.

The first target quantity is a target quantity in the descriptor of the fourth target task, and is represented by a BLK DIM field.

In this implementation, the dispatcher segments the target task into a plurality of block subtasks that are of a finer granularity and that can be independently dispatched, and dispatches the plurality of block subtasks to the plurality of execution units for execution. In this way, a dispatch and execution policy of the subgraph task with the finer granularity is provided, parallelism of dispatching and execution of the subtasks in the subgraph is fully explored, and parallel execution of the block subtasks in the subgraph is implemented, so that the utilization of the execution unit can be improved, and overall execution time can be reduced.

In a possible implementation, the dispatcher is further configured to: after receiving, from the at least one execution unit, a notification indicating that execution of the first block subtasks of the first target quantity is completed, send, to the MCU, a notification indicating that execution of the fourth target task is completed.

In this implementation, the execution unit may return an execution status of the block subtask to the dispatcher. After execution of all block subtasks obtained by segmenting a target task is completed, it indicates that execution of the target task is completed, and the dispatcher sends, to the MCU, a notification indicating that execution of the target task is completed. In this way, the MCU is notified to perform control dependency management on a successor task of the target task. The successor task of the target task is another target task that depends on the target task.

In a possible implementation, the scheduler is further configured to: read the descriptor of the fourth target task from the third buffer; and if the descriptor of the fourth target task further includes a first target index number, notify the third buffer to obtain and cache a descriptor of first target data. The first target index number is used to identify the first target data, and input data of the fourth target task includes the first target data. The scheduling apparatus is coupled to the host, and the third buffer obtains the descriptor of the first target data from the memory of the host.

The first target index number is a second index number in the descriptor of the fourth target task. The first target data is target input data of the fourth target task.

In this implementation, in a process in which the scheduler schedules the target task to the dispatcher, for example, when the target task exits the second buffer, the scheduler may read the descriptor of the target task, and determine whether the input data of the target task needs to be prefetched before the target task is executed. If the input data of the target task needs to be prefetched, the scheduler notifies the third buffer to prefetch and cache the descriptor of the input data of the target task. It should be understood that when generating a cache management operation task indicating to prefetch the input data of the target task, the dispatcher needs to use the descriptor of the input data of the target task. In this way, when the dispatcher needs to use the descriptor of the input data of the target task, the descriptor of the input data of the target task has been cached in the third buffer, so that a hit rate of reading, by the dispatcher, the descriptor of the input data from the third buffer can be improved.

In a possible implementation, the plurality of first target tasks include the fourth target task. The dispatcher is further configured to: read the descriptor of the first target data from the third buffer; and if the descriptor of the first target data includes a second target index number, generate a first cache management operation task, and dispatch the first cache management operation task to the execution apparatus. The second target index number is used to identify the fourth target task, and the first cache management operation task indicates to prefetch the first target data.

The second target index number is a fourth index number in the descriptor of the first target data.

It should be understood that, for the cache management operation task generated by the dispatcher, the dispatcher may alternatively segment the cache management operation task into a plurality of block subtasks, and dispatch the plurality of block subtasks to corresponding execution units for execution. For example, the dispatching the first cache management operation task to the execution apparatus includes: segmenting the first cache management operation task into second block subtasks of a second target quantity, and dispatching the second block subtasks of the second target quantity to the execution apparatus.

In this implementation, the dispatcher may generate the cache management operation task indicating to prefetch the input data of the target task, and dispatch the cache management operation task to the execution apparatus for execution, to prefetch the input data of the target task. In this way, before the target task is executed, the input data of the target task is prefetched in time, and is locally cached. For example, the execution apparatus includes the fourth buffer, and the execution apparatus caches the prefetched input data of the target task in the fourth buffer. When executing the target task, the scheduling apparatus does not need to externally obtain the input data of the target task, but directly obtains the input data of the target task from a local buffer. This can effectively improve a hit rate of obtaining the input data of the target task, and reduce access bandwidth for obtaining the input data of the target task and a delay of obtaining the input data of the target task. It should be noted that the input data of the target task includes shared input data and exclusive input data. The shared input data is input data shared by a plurality of target tasks, and the exclusive input data is input data dedicated to only a specific target task. The shared input data needs to be prefetched for only one time, and does not need to be prefetched each time before the target task is executed, thereby reducing access bandwidth for prefetching the input data and reducing a delay of prefetching the input data. For example, in a large-scale graph computing task, input data between a plurality of subnode tasks is repetitive, that is, the plurality of subnode tasks use a same set of common configuration parameters like weights. Therefore, the input data of the target task may be classified into the shared input data and the exclusive input data. The shared data needs to be prefetched for only one time when a first target task to which the shared data is input is executed. This avoids repeated prefetching, waste of the bandwidth, and an increase of the delay. An input data prefetching mechanism provided in this application is particularly applicable to a data-type application scenario in which the memory of the host is frequently accessed. A cache loss of valid data is avoided through timely prefetching.

In a possible implementation, the plurality of second target tasks include the fourth target task, the descriptor of the first target data further includes a second target count, the second target count indicates a quantity of sixth target tasks whose execution is uncompleted, input data of the sixth target task includes the first target data, and the sixth target task includes the fourth target task. The MCU is further configured to: after receiving, from the dispatcher, the notification indicating that execution of the fourth target task is completed, notify the third buffer to subtract one from the second target count.

The second target count is a second count in the descriptor of the first target data. The sixth target task is a consumer TST of the first target data.

In this implementation, the first target data is the shared input data, and is the input data of a type of target task, namely, the sixth target task. There may be one or more sixth target tasks. Therefore, the first target data only needs to be prefetched for one time, and does not need to be prefetched each time before the target task is executed. In this way, access bandwidth for prefetching the first target data can be reduced, and a delay of prefetching the first target data can be reduced. In addition, after receiving a notification indicating that execution of any sixth target task is completed, for example, after receiving the notification indicating that execution of the fourth target task is completed, the MCU performs data lifecycle management on the first target data. In this way, when the first target data does not need to be used, the first target data is released in time, thereby improving a hit rate and effective utilization of the local buffer in the scheduling apparatus.

In a possible implementation, the MCU is further configured to: when the second target count is decreased to zero, send a second cache management operation task to the scheduler. The second cache management operation task indicates to invalidate the first target data.

In this implementation, when the first target data does not need to be used, the first target data is invalidated in time. In this way, data, in the buffer, that has been used and is no longer used is released in time, so that a problem that the hit rate and the effective utilization of the buffer are reduced because the invalid data occupies buffer space for long time is not caused.

In a possible implementation, the plurality of first target tasks include the fourth target task. The dispatcher is further configured to: read the descriptor of the fourth target task from the third buffer; and if the descriptor of the fourth target task further includes a third target index number, notify the third buffer to obtain and cache a descriptor of second target data. The third target index number is used to identify the second target data, and the second target data includes a part or all of output data of the fourth target task. The scheduling apparatus is coupled to the host, and the third buffer obtains the descriptor of the second target data from the memory of the host.

The third target index number is a third index number in the descriptor of the fourth target task. The second target data includes target input data of the fourth target task, or the second target data is target input data of the fourth target task.

In this implementation, in a process in which the dispatcher dispatches the target task to the execution apparatus, for example, when the target task exits the first buffer, the dispatcher may read the descriptor of the target task, and determine whether the output data on which data lifecycle management needs to be performed exists in the target task. If the output data on which data lifecycle management needs to be performed exists, the dispatcher notifies the third buffer to prefetch and cache the descriptor of the output data on which data lifecycle management needs to be performed. It should be understood that when performing data lifecycle management on the output data of the target task, the MCU needs to use the descriptor of the output data of the target task. In this way, when the MCU needs to use the descriptor of the output data of the target task, the descriptor of the output data of the target task has been cached in the third buffer, so that a hit rate of reading, by the MCU, the descriptor of the output data from the third buffer can be improved.

In a possible implementation, the plurality of second target tasks include the fourth target task, the descriptor of the second target data includes a third target count, the third target count indicates a quantity of seventh target tasks whose execution is uncompleted, the second target data includes a part or all of output data of the seventh target task, and the seventh target task includes the fourth target task. The MCU is further configured to: after receiving, from the dispatcher, the notification indicating that execution of the fourth target task is completed, notify the third buffer to subtract one from the third target count.

The third target count is a third count in the descriptor of the second target data. The seventh target task is a producer TST of the second target data.

In this implementation, the second target data includes a part or all of the output data of a type of target task, namely, the seventh target task. There may be one or more seventh target tasks. In this way, after receiving a notification indicating that execution of any seventh target task is completed, for example, after receiving the notification indicating that execution of the fourth target task is completed, the MCU performs data lifecycle management on the second target data. In this way, when the second target data is generated, the second target data is written back to the memory of the host in time, the local buffer space in the scheduling apparatus is released, and the effective utilization of the local buffer in the scheduling apparatus is improved.

In a possible implementation, the MCU is further configured to: when the third target count is decreased to zero, send a third cache management operation task to the scheduler. The third cache management operation task indicates to write the second target data to the host, and the scheduling apparatus is coupled to the host.

In this implementation, when the second target data is generated, the second target data is written back in time. In this way, the output data of the target task is written back to the memory of the host, and the local buffer space in the scheduling apparatus is released. Therefore, a problem that the hit rate and the effective utilization of the buffer are reduced because the output data of the target task occupies the buffer space for long time is not caused.

In a possible implementation, the plurality of first target tasks include the fourth target task, and the plurality of second target tasks include the fourth target task. The dispatcher is further configured to: read the descriptor of the fourth target task from the third buffer; and if the descriptor of the fourth target task further includes a fourth target index number, notify the third buffer to obtain and cache a descriptor of an eighth target task. The fourth index number is used to identify the eighth target task, and the eighth target task depends on the fourth target task. The scheduling apparatus is coupled to the host, and the third buffer obtains the descriptor of the eighth target task from the memory of the host.

The fourth target index number is a first index number in the descriptor of the fourth target task.

The eighth target task depends on the fourth target task, and the eighth target task is a successor task of the fourth target task.

In this implementation, in the process in which the dispatcher dispatches the target task to the execution apparatus, for example, when the target task exits the first buffer, the dispatcher notifies the third buffer to prefetch and cache the descriptor of the successor task of the target task. It should be understood that when performing control dependency management on the successor task of the target task, the MCU needs to use the descriptor of the successor task of the target task. In this way, when the MCU needs to use the descriptor of the successor task of the target task, the descriptor of the successor task of the target task has been cached in the third buffer, so that a hit rate of reading, by the MCU, the descriptor of the successor task from the third buffer can be improved.

In a possible implementation, the descriptor of the eighth target task includes a fourth target count, the fourth target count indicates a quantity of ninth target tasks whose execution is uncompleted, the eighth target task depends on the ninth target task, and the ninth target task includes the fourth target task. The MCU is further configured to: after receiving, from the dispatcher, the notification indicating that execution of the fourth target task is completed, notify the third buffer to subtract one from the fourth target count.

The fourth target count is a first count in the descriptor of the eighth target task.

The eighth target task depends on a type of target task, namely, the ninth target task, the eighth target task is a successor task of the type of target task, namely, the ninth target task, and the fourth target task is of the type of target task, namely, the ninth target task.

In this implementation, after execution of the fourth target task is completed, the MCU performs control dependency management on the eighth target task. In addition, because the dispatcher continuously dispatches target tasks to the execution apparatus, after execution of the fourth target task is completed, the dispatcher immediately dispatches, for execution, another target task to an execution unit that originally executes the fourth target task. In this way, it can be ensured that removal of a dependency of a target task and execution of the another target task are performed in parallel, and a delay of removing the dependency of the target task is concealed behind the execution of the another target task, thereby improving overall performance. For example, in the large-scale graph computing task, a complex dependency usually exists between subgraph tasks, and limits a degree of parallelism for executing the subgraph tasks. According to this application, the delay of removing the dependency of the task can be effectively concealed, an overall scheduling delay can be reduced, and the utilization of the execution unit can be improved. For example, in a scenario in which a target task A depends on a target task B, and a target task C depends on a target task D, after execution of the target task A is completed, the target task C and removal of a dependency of the target task B may be executed in parallel, and time for removing the dependency of the target task B is completely hidden in execution time of the target task C; and after execution of the target task C is completed, the target task B and removal of a dependency of the target task D may be continued to be immediately executed.

In a possible implementation, the MCU is further configured to: when the fourth target count is decreased to zero, send the eighth target task to the scheduler. The scheduling apparatus is coupled to the host. The MCU obtains the eighth target task from the memory of the host, and sends the eighth target task to the scheduler.

In this implementation, the eighth target task depends on the fourth target task. After execution of the fourth target task is completed and a dependency of the eighth target task is removed, the eighth target task may be pushed to the scheduler for scheduling, scheduled to the dispatcher for dispatching, and dispatched to the execution apparatus for execution. In this way, a loop that forms the tasks in the subgraph is executed repeatedly until execution of the subgraph ends.

It should be noted that, for function descriptions of the modules in the embodiment shown in FIG. 2, refer to related descriptions in the embodiment shown in FIG. 1. Details are not described herein again.

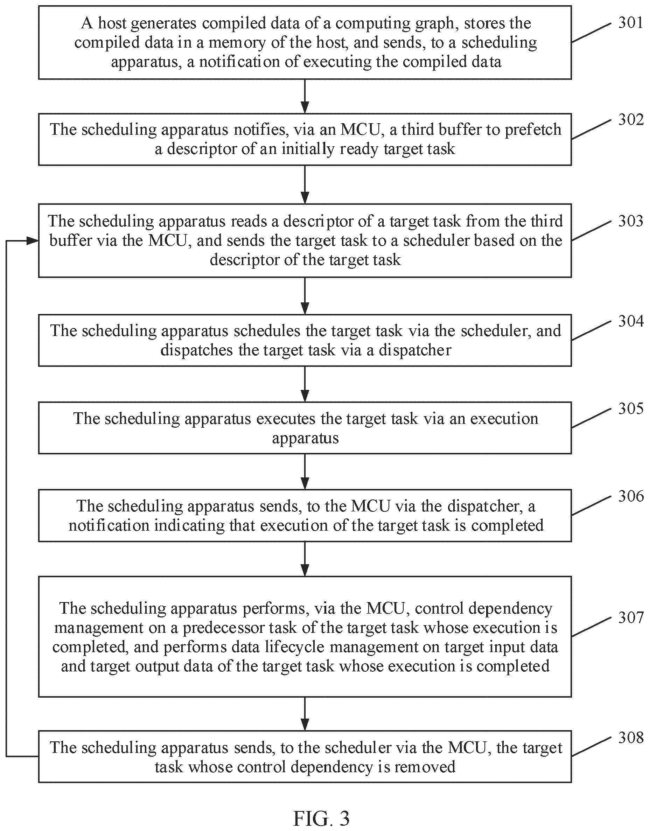

FIG. 3 is a flowchart of steps of performing computing graph compilation and execution by the system shown in FIG. 2. The following steps are specifically included but are not limited thereto.

301: A host generates compiled data of a computing graph, stores the compiled data in a memory of the host, and sends, to a scheduling apparatus, a notification of executing the compiled data.

In a possible implementation, before step 301, the system is initially configured. For example, the host performs initialization configuration. The initialization configuration includes the following parts:
(1) A proper quantity of task delivery channels is allocated based on a throughput of each service flow.
(2) Execution units are uniformly divided, and the execution units are allocated to different execution resource pools based on actual application requirements, to implement physical isolation of hardware resources.

After completing the initialization configuration, the host compiles the received computing graph to obtain the compiled data, and fills the compiled data into a memory of the task delivery channel allocated during the initialization configuration. The compiled data includes a TST, a descriptor of the TST, and descriptors of data (including a descriptor of target input data of the TST and a descriptor of target output data of the TST), a CMO task, a descriptor of the CMO task, and the like.

The host sends a notification of executing the compiled data to the scheduling apparatus. The host sends the notification of executing the compiled data to the scheduling apparatus, to notify the scheduling apparatus that the compiled data is stored in the memory of the host. The scheduling apparatus may obtain the compiled data from the memory of the host, and execute the compiled data.

302: The scheduling apparatus notifies, via an MCU, a third buffer to prefetch a descriptor of an initially ready target task.

The target task includes a TST and a CMO task, and the initially ready target task includes an initially ready TST and an initially ready CMO task.

Specifically, the notification of executing the compiled data may include information in the descriptor of the TST and information in the descriptor of the CMO task. The information in the descriptor of the TST is used by the scheduling apparatus to determine the initially ready TST in the compiled data, and the information in the descriptor of the CMO task is used by the scheduling apparatus to determine the initially ready CMO task in the compiled data. The MCU may notify, based on the information in the descriptor of the TST, the third buffer to prefetch a descriptor of the initially ready TST, and locally cache the descriptor; and notify, based on the information in the descriptor of the CMO task, the third buffer to prefetch a descriptor of the initially ready CMO task, and locally cache the descriptor.

303: The scheduling apparatus reads a descriptor of a target task from the third buffer via the MCU, and sends the target task to a scheduler based on the descriptor of the target task.

Descriptors of target tasks read by the MCU from the third buffer include the descriptor of the initially ready target task and a descriptor of a subsequently ready target task. When step 303 is performed for a first time, the MCU reads the descriptor of the initially ready target task from the third buffer. Then, the MCU may further read a descriptor of a ready target task from the third buffer.

Specifically, the scheduling apparatus reads a descriptor of a TST from the third buffer via the MCU, and sends the TST to the scheduler based on the descriptor of the TST. The scheduling apparatus reads the descriptor of the CMO task from the third buffer via the MCU, and sends the CMO task to the scheduler based on the descriptor of the CMO task.

It should be noted that the MCU may send a plurality of target tasks to the scheduler in parallel. Any one of the plurality of target tasks sent in parallel may be a TST or a CMO task. Sending processes of the plurality of target tasks sent in parallel are the same.

One TST is used as an example. The scheduling apparatus reads a descriptor of the TST from the third buffer via the MCU, obtains the TST from the memory of the host based on the descriptor of the TST, and sends the TST to the scheduler. For example, the MCU reads the descriptor of the TST from the third buffer through software and hardware interfaces. If a first count in the descriptor of the TST is zero, the MCU obtains the TST from the memory of the host, and sends the TST to the scheduler.

Alternatively, one CMO task is used as an example. The scheduling apparatus reads a descriptor of the CMO task from the third buffer via the MCU, obtains the CMO task from the memory of the host based on the descriptor of the CMO task, and sends the CMO task to the scheduler. For example, the MCU reads the descriptor of the CMO task from the third buffer through the software and hardware interfaces. If a first count in the descriptor of the CMO task is zero, the MCU obtains the CMO task from the memory of the host, and sends the CMO task to the scheduler.

The descriptor of the TST further includes information like a task type of the TST, a priority of the TST, and an execution unit of the TST. When sending the TST to the scheduler, the MCU further sends the information like the task type of the TST, the priority of the TST, and the execution unit of the TST to the scheduler together. In this way, for each received TST, the scheduler caches the TST in a ready queue in one of a plurality of second buffers based on a task attribute of the TST.

The descriptor of the CMO task further includes information like a task type of the CMO task, a priority of the CMO task, and an execution unit of the CMO task. When sending the CMO task to the scheduler, the MCU further sends the information like the task type of the CMO task, the priority of the CMO task, and the execution unit of the CMO task to the scheduler together. In this way, for each received CMO task, the scheduler caches the CMO task in a ready queue in one of the plurality of second buffers based on a task attribute of the CMO task.

The task attribute includes a task type, a priority, and an execution unit.

304: The scheduling apparatus schedules the target task via the scheduler, and dispatches the target task via a dispatcher.

Specifically, the scheduling apparatus schedules, via the scheduler, TSTs or CMO tasks cached in the plurality of second buffers to the dispatcher, and dispatches, via the dispatcher, TSTs or CMO tasks cached in a plurality of first buffers to corresponding execution units in an execution apparatus.

It should be understood that the scheduling apparatus may schedule, in parallel to the dispatcher at one time via the scheduler, a plurality of target tasks cached in the plurality of second buffers. Any one of the plurality of target tasks scheduled in parallel may be a TST or a CMO task. Further, it should be understood that the scheduling apparatus may dispatch, in parallel to the corresponding execution units in the execution apparatus at one time via the dispatcher, the plurality of target tasks cached in the plurality of first buffers. Any one of the plurality of target tasks dispatched in parallel may be a TST or a CMO task.

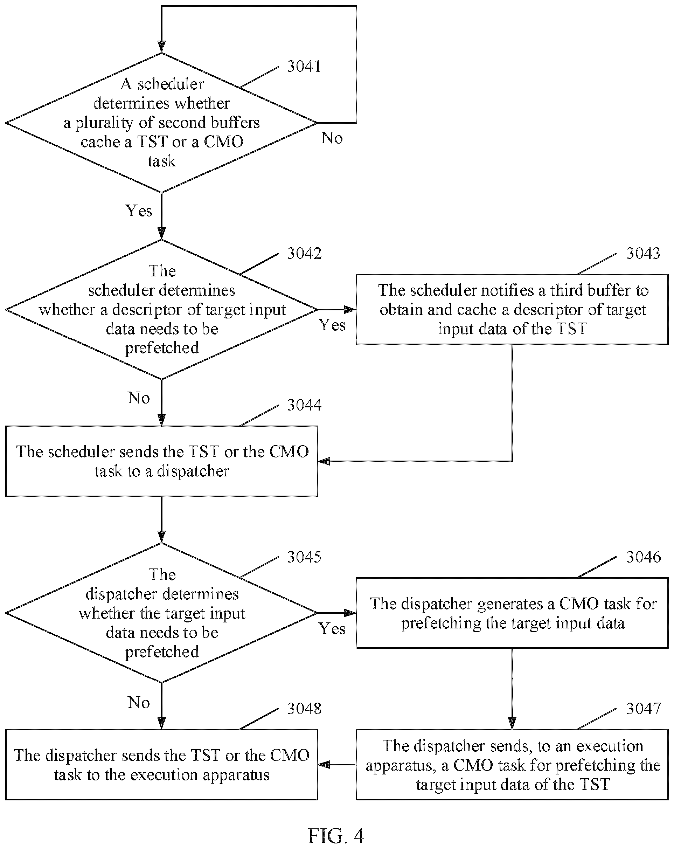

FIG. 4 is a diagram of procedures of scheduling and dispatching one TST or one CMO task according to this application. The scheduling and dispatch procedures specifically include the following steps.

3041: The scheduler determines whether the plurality of second buffers cache the TST or the CMO task.

It should be understood that the plurality of second buffers are configured to cache the TST and the CMO task.

In this way, if the scheduler determines that the TST or the CMO task is cached in the plurality of second buffers, step 3042 is performed. If the scheduler determines that the TST or the CMO task is not cached in the plurality of second buffers, the scheduler continues to determine whether the plurality of second buffers cache the TST or the CMO task.

A scheduling process of one TST or one CMO task is shown in step 3042 to step 3044.

3042: The scheduler determines whether a descriptor of target input data needs to be prefetched.

It should be understood that input data and output data only exist in the TST, and input data or output data does not exist in the CMO task.

Specifically, for a TST in which target input data exists, the scheduler determines that a descriptor of the target input data of the TST needs to be prefetched, and step 3043 is performed. For the CMO task and a TST in which target input data does not exist, the scheduler determines that a descriptor of the target input data does not need to be prefetched, and step 3044 is performed.

In a possible implementation, for any TST cached by the plurality of second buffers, the scheduler may read a descriptor of the TST from the third buffer, determine, based on the descriptor of the TST, whether the target input data exists in the TST, and further determine whether a descriptor of the target input data of the TST needs to be prefetched. Specifically, if the descriptor of the TST includes a second index number used to identify the target input data of the TST, the target input data exists in the TST, and the descriptor of the target input data of the TST needs to be further prefetched.

3043: The scheduler notifies the third buffer to obtain and cache the descriptor of the target input data of the TST.

Specifically, the scheduler obtains the second index number from the third buffer, where the second index number is used to identify the target input data of the TST. The scheduler notifies, based on the second index number, the third buffer to prefetch the descriptor of the target input data of the TST.

It should be understood that, after the scheduler notifies the third buffer to obtain and cache the descriptor of the target input data of the TST, step 3044 is performed to send the TST to the dispatcher.

3044: The scheduler sends the TST or the CMO task to the dispatcher.

Specifically, if a previously executed step is 3042, the scheduler sends the TST or the CMO task to the dispatcher, where the target input data does not exist in the TST. If a previously executed step is 3043, the scheduler sends the TST to the dispatcher, where the target input data exists in the TST.

When sending the CMO task to the dispatcher, the scheduler also sends a task type of the CMO task to the dispatcher. Similarly, when sending the TST to the dispatcher, the scheduler also sends a task type of the TST to the dispatcher.

In this way, for each received TST, the dispatcher caches the TST in a dispatch queue in one of the plurality of first buffers based on the task type of the TST. Similarly, for each received CMO task, the dispatcher caches the CMO task in a dispatch queue in one of the plurality of first buffers based on the task type of the CMO task.

A dispatch process of one TST or one CMO task is shown in step 3045 to step 3048.

3045: The dispatcher determines whether the target input data needs to be prefetched.

Specifically, for a TST in which target input data exists, the dispatcher determines that target input data of the TST needs to be prefetched, and steps 3046 to 3048 are performed. For the CMO task and a TST in which target input data does not exist, the dispatcher determines that the target input data does not need to be prefetched, and step 3048 is performed.

In a possible implementation, when sending the TST to the dispatcher, the scheduler may further send, to the dispatcher, information indicating that the target input data exists in the TST. In this way, the dispatcher may determine, based on the information, that the target input data of the TST needs to be prefetched.

In another possible implementation, for any TST cached by the plurality of first buffers, the dispatcher may read a descriptor of target input data of the TST from the third buffer. If the dispatcher reads the descriptor of the target input data of the TST from the third buffer, the dispatcher determines that the target input data of the TST needs to be prefetched.

3046: The dispatcher generates a CMO task for prefetching the target input data.

In a possible implementation, for any TST cached by any first buffer, the dispatcher reads a descriptor of target input data of the TST from the third buffer, and generates, based on the descriptor of the target input data of the TST, a CMO task for prefetching the target input data of the TST.

3047: The dispatcher sends, to the execution apparatus, the CMO task for prefetching the target input data of the TST.

The execution apparatus executes the CMO task for prefetching the target input data of the TST, to cache the target input data of the TST in a fourth buffer.

3048: The dispatcher sends the TST or the CMO task to the execution apparatus.

For the CMO task and the TST whose target input data does not require prefetching, the dispatcher performs step 3048 after performing step 3045. For the TST whose target input data requires prefetching, after performing step 3045, the dispatcher may first perform step 3046 and step 3047, and then perform step 3048 after the execution apparatus prefetches the target input data of the TST. Alternatively, for the TST whose target input data requires prefetching, step 3046 and step 3047 may be performed in parallel with step 3048. This is determined based on an actual requirement.

In a possible implementation, for any TST cached by any first buffer, the dispatcher may read a descriptor of the TST from the third buffer, and notify, based on the descriptor of the TST, the third buffer to prefetch a descriptor of a successor task of the TST. Similarly, for any CMO task cached by any first buffer, the dispatcher may read a descriptor of the CMO task from the third buffer, and notify, based on the descriptor of the CMO task, the third buffer to prefetch a descriptor of a successor task of the CMO task.

In a possible implementation, for any TST cached by any first buffer, the dispatcher may obtain a descriptor of the TST from the third buffer, and notify, based on the descriptor of the TST, the third buffer to prefetch a descriptor of target output data of the TST.

In a possible implementation, the dispatcher may segment the TST or the CMO task into one or more BSTs, and send the one or more BSTs to the execution apparatus. A minimum execution unit of the execution apparatus is one BST.

It should be noted that FIG. 4 describes a procedure of scheduling and dispatching one TST or one CMO task. Actually, the scheduler may schedule a plurality of target tasks in parallel, and a scheduling procedure of each target task is shown in FIG. 4. In addition, the dispatcher may dispatch the plurality of target tasks in parallel, and a dispatch procedure of each target task is also shown in FIG. 4.

305: The scheduling apparatus executes the target task via the execution apparatus.

The execution apparatus includes a plurality of types of execution units. Different types of execution units execute target tasks of different task types in parallel, and a notification indicating that execution of the target tasks is completed is returned to the dispatcher.

In a possible implementation, the execution apparatus may receive one or more BSTs from the dispatcher, and the one or more BSTs are obtained by segmenting a same TST or a same CMO task. A plurality of BSTs obtained by segmenting the same TST or the same CMO task may be jointly executed by a plurality of execution units of a same type. Each of the plurality of execution units executes at least one BST in the plurality of BSTs. Each time execution of the BST is completed, the execution unit returns, to the dispatcher, a notification indicating that execution of the BST is completed. In addition, if output data exists in the BST, the execution unit further caches the output data of the BST in the fourth buffer. It should be understood that one TST includes a plurality of BSTs, and the execution unit caches output data of each BST in the fourth buffer, to cache output data of the TST in the fourth buffer.

306: The scheduling apparatus sends, to the MCU via the dispatcher, the notification indicating that execution of the target task is completed.

After receiving the notification indicating that execution of the target task is completed, the dispatcher sends, to the MCU, the notification indicating that execution of the target task is completed.

In a possible implementation, after receiving a notification indicating that execution of all BSTs of one TST or one CMO task is completed, the dispatcher sends, to the MCU, the notification indicating that execution of the TST or the CMO task is completed.

307: The scheduling apparatus performs, via the MCU, control dependency management on a successor task of the target task whose execution is completed, and performs data lifecycle management on target input data and target output data of the target task whose execution is completed.

Specifically, after receiving a notification indicating that execution of any target task is completed, the MCU performs control dependency management on a successor task of the target task. After a control dependency of the successor task of the target task is removed, step 308 is performed.

In a possible implementation, after receiving a notification indicating that execution of any TST is completed, the MCU reads a descriptor of the TST from the third buffer. The MCU notifies, based on the descriptor of the TST, the third buffer to subtract one from a first count in a descriptor of a successor task of the TST. When the first count in the descriptor of the successor task of the TST is decreased to zero, a control dependency of the successor task of the TST is removed. Similarly, after receiving a notification indicating that execution of any CMO task is completed, the MCU reads a descriptor of the CMO task from the third buffer. The MCU notifies, based on the descriptor of the CMO task, the third buffer to subtract one from a first count in a descriptor of a successor task of the CMO task. When the first count in the descriptor of the successor task of the CMO task is decreased to zero, a control dependency of the successor task of the CMO task is removed.

In addition, after receiving a notification indicating that execution of any target task is completed, the MCU further performs data lifecycle management on target input data and target output data of the target task.

In a possible implementation, after receiving a notification indicating that execution of any TST is completed, the MCU reads a descriptor of the TST from the third buffer. The MCU notifies, based on the descriptor of the TST, the third buffer to subtract one from a second count in a descriptor of target input data of the TST. When the second count in the descriptor of the target input data of the TST is decreased to zero, it indicates that the target input data of the TST needs to be invalidated.

In a possible implementation, after receiving a notification indicating that execution of any TST is completed, the MCU reads a descriptor of the TST from the third buffer. The MCU notifies, based on the descriptor of the TST, the third buffer to subtract one from a third count in a descriptor of target output data of the TST. When the third count in the descriptor of the target output data of the TST is decreased to zero, it indicates that the target output data of the TST needs to be written back.

308: The scheduling apparatus sends, to the scheduler via the MCU, the target task whose control dependency is removed, and returns to perform step 303.

The target task whose control dependency is removed includes a TST and a CMO task whose control dependency is removed.

It should be understood that each step in step 303 to step 308 may be performed for the plurality of target tasks in parallel. In other words, there may be one or more target tasks described in each step of step 303 to step 308.

It should be noted that, for descriptions of the steps in embodiments shown in FIG. 3 and FIG. 4, refer to related descriptions in embodiments shown in FIG. 1 and FIG. 2. Details are not described herein again.

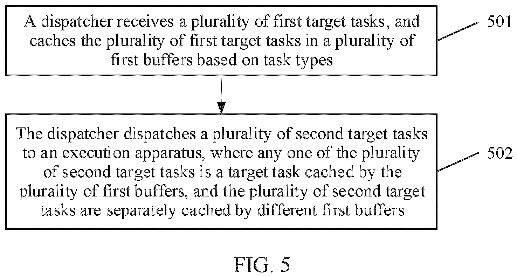

FIG. 5 is a schematic flowchart of a scheduling method according to this application. The scheduling method is applied to a scheduling apparatus. The scheduling apparatus includes a dispatcher, the dispatcher is coupled to an execution apparatus, the dispatcher includes a plurality of first buffers, each of the plurality of first buffers is configured to cache target tasks of one task type, the target tasks include a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask. The scheduling method includes but is not limited to the following steps or operations.

501: The dispatcher receives a plurality of first target tasks, and caches the plurality of first target tasks in the plurality of first buffers based on task types.

502: The dispatcher dispatches a plurality of second target tasks to the execution apparatus, where any one of the plurality of second target tasks is a target task cached by the plurality of first buffers, and the plurality of second target tasks are separately cached by different first buffers.

In a possible implementation, the scheduling apparatus further includes a scheduler, and the scheduler includes a plurality of second buffers. The method further includes: The scheduler receives a plurality of third target tasks, and caches the plurality of third target tasks in the plurality of second buffers. The scheduler sends the plurality of first target tasks to the dispatcher. Any one of the plurality of first target tasks is a target task cached by the plurality of second buffers.

In a possible implementation, each of the plurality of second buffers is configured to cache target tasks of one category, and target tasks of a same category have a same one of the following: a task type, a priority, and an execution unit.

In a possible implementation, the scheduling apparatus further includes a microcontroller unit MCU and a third buffer, the third buffer caches a descriptor of a fourth target task, and the fourth target task is any one of the plurality of third target tasks. The method further includes: The MCU reads the descriptor of the fourth target task from the third buffer. The descriptor of the fourth target task includes a first target count, the first target count indicates a quantity of fifth target tasks whose execution is uncompleted, and the fourth target task depends on the fifth target task. If the first target count is zero, the MCU sends the fourth target task to the scheduler.

In a possible implementation, the method further includes: The MCU notifies the third buffer to obtain and cache the descriptor of the fourth target task.

In a possible implementation, the execution apparatus includes a plurality of execution units, the plurality of first target tasks include the fourth target task, and the plurality of second target tasks include the fourth target task. The dispatching a plurality of second target tasks to the execution apparatus includes: reading the descriptor of the fourth target task from the third buffer; and if the descriptor of the fourth target task further includes a first target quantity, segmenting the fourth target task into first block subtasks of the first target quantity, and dispatching the first block subtasks of the first target quantity to at least one of the plurality of execution units. The first target quantity indicates a quantity of first block subtasks included in the fourth target task.

In a possible implementation, the method further includes: After the dispatcher receives, from the at least one execution unit, a notification indicating that execution of the first block subtasks of the first target quantity is completed, the dispatcher sends, to the MCU, a notification indicating that execution of the fourth target task is completed.

In a possible implementation, the method further includes: The scheduler reads the descriptor of the fourth target task from the third buffer. If the descriptor of the fourth target task further includes a first target index number, the scheduler notifies the third buffer to obtain and cache a descriptor of first target data. The first target index number is used to identify the first target data, and input data of the fourth target task includes the first target data.

In a possible implementation, the plurality of first target tasks include the fourth target task. The method further includes: The dispatcher reads the descriptor of the first target data from the third buffer. If the descriptor of the first target data includes a second target index number, the dispatcher generates a first cache management operation task, and dispatches the first cache management operation task to the execution apparatus. The second target index number is used to identify the fourth target task, and the first cache management operation task indicates to prefetch the first target data.

In a possible implementation, the plurality of second target tasks include the fourth target task, the descriptor of the first target data further includes a second target count, the second target count indicates a quantity of sixth target tasks whose execution is uncompleted, input data of the sixth target task includes the first target data, and the sixth target task includes the fourth target task. The method further includes: After the MCU receives, from the dispatcher, the notification indicating that execution of the fourth target task is completed, the MCU notifies the third buffer to subtract one from the second target count.

In a possible implementation, the method further includes: When the second target count is decreased to zero, the MCU sends a second cache management operation task to the scheduler. The second cache management operation task indicates to invalidate the first target data.

In a possible implementation, the plurality of first target tasks include the fourth target task. The method further includes: The dispatcher reads the descriptor of the fourth target task from the third buffer. If the descriptor of the fourth target task further includes a third target index number, the dispatcher notifies the third buffer to obtain and cache a descriptor of second target data. The third target index number is used to identify the second target data, and the second target data includes a part or all of output data of the fourth target task.

In a possible implementation, the plurality of second target tasks include the fourth target task, the descriptor of the second target data includes a third target count, the third target count indicates a quantity of seventh target tasks whose execution is uncompleted, the second target data includes a part or all of output data of the seventh target task, and the seventh target task includes the fourth target task. The method further includes: After the MCU receives, from the dispatcher, the notification indicating that execution of the fourth target task is completed, the MCU notifies the third buffer to subtract one from the third target count.

In a possible implementation, the method further includes: When the third target count is decreased to zero, the MCU sends a third cache management operation task to the scheduler. The third cache management operation task indicates to write the second target data to a host, and the scheduling apparatus is coupled to the host.

In a possible implementation, the plurality of first target tasks include the fourth target task, and the plurality of second target tasks include the fourth target task. The method further includes: The dispatcher reads the descriptor of the fourth target task from the third buffer. If the descriptor of the fourth target task further includes a fourth target index number, the dispatcher notifies the third buffer to obtain and cache a descriptor of an eighth target task. The fourth index number is used to identify the eighth target task, and the eighth target task depends on the fourth target task.

In a possible implementation, the descriptor of the eighth target task includes a fourth target count, the fourth target count indicates a quantity of ninth target tasks whose execution is uncompleted, the eighth target task depends on the ninth target task, and the ninth target task includes the fourth target task. The method further includes: After the MCU receives, from the dispatcher, the notification indicating that execution of the fourth target task is completed, the MCU notifies the third buffer to subtract one from the fourth target count.

In a possible implementation, the method further includes: When the fourth target count is decreased to zero, the MCU sends the eighth target task to the scheduler.

It should be noted that, for descriptions of the steps in embodiments shown in FIG. 5, refer to related descriptions in embodiments shown in FIG. 1 to FIG. 4. Details are not described herein again.

This application provides an electronic device. The electronic device has a function of implementing any scheduling method in the embodiment shown in FIG. 5. The function may be implemented by hardware, or may be implemented by hardware executing corresponding software. The hardware or the software includes one or more modules corresponding to the function.

This application provides an electronic device. The electronic device includes any scheduling apparatus in the embodiment shown in FIG. 2. The electronic device may further include a memory. The memory is configured to be coupled to the scheduling apparatus, and the memory stores necessary program instructions and data of a processor in the scheduling apparatus. The electronic device may further include a communication interface, used for communication between the electronic device and another device or a communication network.

This application provides a computer storage medium. The computer storage medium stores a computer program, and when the computer program is executed by a scheduling apparatus, the scheduling apparatus is enabled to perform a procedure of the scheduling method according to any one of the embodiment shown in FIG. 5.

This application provides a computer program. The computer program includes instructions, and when the computer program is executed by a scheduling apparatus, the scheduling apparatus is enabled to perform a procedure of the scheduling method according to any one of the embodiment shown in FIG. 5.

This application provides a chip system. The chip system includes any scheduling apparatus in the embodiment shown in FIG. 2. In a possible implementation, the chip system further includes a memory. The memory is configured to store necessary or related program instructions and data of a processor in the scheduling apparatus. The chip system may include a chip, or may include a chip and another discrete component.

It should be understood that sequence numbers of the foregoing processes do not mean execution sequences in various embodiments of this application. The execution sequences of the processes should be determined based on functions and internal logic of the processes, and should not be construed as any limitation on the implementation processes of this application.

Persons of ordinary skill in the art may be aware that, in combination with the examples described in embodiments provided in this specification, units and algorithm steps may be implemented by using electronic hardware or a combination of computer software and the electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application.

A sequence of the steps of the method in this application may be adjusted, combined, or removed based on an actual requirement. In addition, for terms and descriptions in embodiments of this application, refer to corresponding descriptions in another embodiment.

The modules in the apparatus in this application may be combined, divided, and deleted based on an actual requirement.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof. In addition, the modifications and replacements do not make the essence of the corresponding technical solutions depart from the scope of the technical solutions of embodiments of this application.

## Claims

1. A scheduling apparatus, comprising a dispatcher, wherein the dispatcher is coupled to an execution apparatus, the dispatcher comprises a plurality of first buffers, each of the plurality of first buffers is configured to cache target tasks of one task type, the target tasks comprise a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask; and
the dispatcher is configured to:
receive a plurality of first target tasks, and cache the plurality of first target tasks in the plurality of first buffers based on task types; and
dispatch a plurality of second target tasks to the execution apparatus, wherein any one of the plurality of second target tasks is a target task cached by the plurality of first buffers, and the plurality of second target tasks are separately cached by different first buffers.

2. The scheduling apparatus according to claim 1, wherein the scheduling apparatus further comprises a scheduler, and the scheduler comprises a plurality of second buffers; and
the scheduler is configured to:
receive a plurality of third target tasks, and cache the plurality of third target tasks in the plurality of second buffers; and
send the plurality of first target tasks to the dispatcher, wherein any one of the plurality of first target tasks is a target task cached by the plurality of second buffers.

3. The scheduling apparatus according to claim 2, wherein each of the plurality of second buffers is configured to cache target tasks of one category, and target tasks of a same category have a same one of the following: a task type, a priority, and an execution unit.

4. The scheduling apparatus according to claim 2 or 3, wherein the scheduling apparatus further comprises a microcontroller unit MCU and a third buffer, the third buffer caches a descriptor of a fourth target task, and the fourth target task is any one of the plurality of third target tasks; and
the MCU is configured to:
read the descriptor of the fourth target task from the third buffer, wherein the descriptor of the fourth target task comprises a first target count, the first target count indicates a quantity of fifth target tasks whose execution is uncompleted, and the fourth target task depends on the fifth target task; and
if the first target count is zero, send the fourth target task to the scheduler.

5. The scheduling apparatus according to claim 4, wherein the MCU is further configured to:
notify the third buffer to obtain and cache the descriptor of the fourth target task.

6. The scheduling apparatus according to claim 4 or 5, wherein the execution apparatus comprises a plurality of execution units, the plurality of first target tasks comprise the fourth target task, and the plurality of second target tasks comprise the fourth target task; and
the dispatcher is specifically configured to:
read the descriptor of the fourth target task from the third buffer; and
if the descriptor of the fourth target task further comprises a first target quantity, segment the fourth target task into first block subtasks of the first target quantity, and dispatch the first block subtasks of the first target quantity to at least one of the plurality of execution units, wherein the first target quantity indicates a quantity of first block subtasks comprised in the fourth target task.

7. The scheduling apparatus according to claim 6, wherein the dispatcher is further configured to:
after receiving, from the at least one execution unit, a notification indicating that execution of the first block subtasks of the first target quantity is completed, send, to the MCU, a notification indicating that execution of the fourth target task is completed.

8. The scheduling apparatus according to any one of claims 4 to 7, wherein the scheduler is further configured to:
read the descriptor of the fourth target task from the third buffer; and
if the descriptor of the fourth target task further comprises a first target index number, notify the third buffer to obtain and cache a descriptor of first target data, wherein the first target index number is used to identify the first target data, and input data of the fourth target task comprises the first target data.

9. The scheduling apparatus according to claim 8, wherein the plurality of first target tasks comprise the fourth target task; and
the dispatcher is further configured to:
read the descriptor of the first target data from the third buffer; and
if the descriptor of the first target data comprises a second target index number, generate a first cache management operation task, and dispatch the first cache management operation task to the execution apparatus, wherein the second target index number is used to identify the fourth target task, and the first cache management operation task indicates to prefetch the first target data.

10. The scheduling apparatus according to claim 8 or 9, wherein the plurality of second target tasks comprise the fourth target task, the descriptor of the first target data further comprises a second target count, the second target count indicates a quantity of sixth target tasks whose execution is uncompleted, input data of the sixth target task comprises the first target data, and the sixth target task comprises the fourth target task; and
the MCU is further configured to:
after receiving, from the dispatcher, the notification indicating that execution of the fourth target task is completed, notify the third buffer to subtract one from the second target count.

11. The scheduling apparatus according to claim 10, wherein the MCU is further configured to:
when the second target count is decreased to zero, send a second cache management operation task to the scheduler, wherein the second cache management operation task indicates to invalidate the first target data.

12. The scheduling apparatus according to any one of claims 4 to 11, wherein the plurality of first target tasks comprise the fourth target task; and
the dispatcher is further configured to:
read the descriptor of the fourth target task from the third buffer; and
if the descriptor of the fourth target task further comprises a third target index number, notify the third buffer to obtain and cache a descriptor of second target data, wherein the third target index number is used to identify the second target data, and the second target data comprises a part or all of output data of the fourth target task.

13. The scheduling apparatus according to claim 12, wherein the plurality of second target tasks comprise the fourth target task, the descriptor of the second target data comprises a third target count, the third target count indicates a quantity of seventh target tasks whose execution is uncompleted, the second target data comprises a part or all of output data of the seventh target task, and the seventh target task comprises the fourth target task; and
the MCU is further configured to:
after receiving, from the dispatcher, the notification indicating that execution of the fourth target task is completed, notify the third buffer to subtract one from the third target count.

14. The scheduling apparatus according to claim 13, wherein the MCU is further configured to:
when the third target count is decreased to zero, send a third cache management operation task to the scheduler, wherein the third cache management operation task indicates to write the second target data to a host, and the scheduling apparatus is coupled to the host.

15. The scheduling apparatus according to any one of claims 4 to 14, wherein the plurality of first target tasks comprise the fourth target task, and the plurality of second target tasks comprise the fourth target task; and
the dispatcher is further configured to:
read the descriptor of the fourth target task from the third buffer; and
if the descriptor of the fourth target task further comprises a fourth target index number, notify the third buffer to obtain and cache a descriptor of an eighth target task, wherein the fourth index number is used to identify the eighth target task, and the eighth target task depends on the fourth target task.

16. The scheduling apparatus according to claim 15, wherein the descriptor of the eighth target task comprises a fourth target count, the fourth target count indicates a quantity of ninth target tasks whose execution is uncompleted, the eighth target task depends on the ninth target task, and the ninth target task comprises the fourth target task; and
the MCU is further configured to:
after receiving, from the dispatcher, the notification indicating that execution of the fourth target task is completed, notify the third buffer to subtract one from the fourth target count.

17. The scheduling apparatus according to claim 16, wherein the MCU is further configured to:
when the fourth target count is decreased to zero, send the eighth target task to the scheduler.

18. A scheduling method, applied to a scheduling apparatus, wherein the scheduling apparatus comprises a dispatcher, the dispatcher is coupled to an execution apparatus, the dispatcher comprises a plurality of first buffers, each of the plurality of first buffers is configured to cache target tasks of one task type, the target tasks comprise a thread subtask and a cache management operation task, the thread subtask is obtained by segmenting a node subtask, the node subtask is obtained by segmenting a subgraph task, the subgraph task is obtained by compiling a subgraph, and the cache management operation task indicates to perform a cache management operation on input data or output data of the thread subtask; and
the method comprises:
receiving, by the dispatcher, a plurality of first target tasks, and caching the plurality of first target tasks in the plurality of first buffers based on task types; and
dispatching, by the dispatcher, a plurality of second target tasks to the execution apparatus, wherein any one of the plurality of second target tasks is a target task cached by the plurality of first buffers, and the plurality of second target tasks are separately cached by different first buffers.

19. The method according to claim 18, wherein the scheduling apparatus further comprises a scheduler, and the scheduler comprises a plurality of second buffers; and
the method further comprises:
receiving, by the scheduler, a plurality of third target tasks, and caching the plurality of third target tasks in the plurality of second buffers; and
sending, by the scheduler, the plurality of first target tasks to the dispatcher, wherein any one of the plurality of first target tasks is a target task cached by the plurality of second buffers.

20. The method according to claim 19, wherein each of the plurality of second buffers is configured to cache target tasks of one category, and target tasks of a same category have a same one of the following: a task type, a priority, and an execution unit.

21. The method according to claim 19 or 20, wherein the scheduling apparatus further comprises a microcontroller unit MCU and a third buffer, the third buffer caches a descriptor of a fourth target task, and the fourth target task is any one of the plurality of third target tasks; and
the method further comprises:
reading, by the MCU, the descriptor of the fourth target task from the third buffer, wherein the descriptor of the fourth target task comprises a first target count, the first target count indicates a quantity of fifth target tasks whose execution is uncompleted, and the fourth target task depends on the fifth target task; and
if the first target count is zero, sending, by the MCU, the fourth target task to the scheduler.

22. The method according to claim 21, wherein the method further comprises:
notifying, by the MCU, the third buffer to obtain and cache the descriptor of the fourth target task.

23. The method according to claim 21 or 22, wherein the execution apparatus comprises a plurality of execution units, the plurality of first target tasks comprise the fourth target task, and the plurality of second target tasks comprise the fourth target task; and
the dispatching a plurality of second target tasks to the execution apparatus comprises:
reading the descriptor of the fourth target task from the third buffer; and
if the descriptor of the fourth target task further comprises a first target quantity, segmenting the fourth target task into first block subtasks of the first target quantity, and dispatching the first block subtasks of the first target quantity to at least one of the plurality of execution units, wherein the first target quantity indicates a quantity of first block subtasks comprised in the fourth target task.

24. The method according to claim 23, wherein the method further comprises:
after the dispatcher receives, from the at least one execution unit, a notification indicating that execution of the first block subtasks of the first target quantity is completed, sending, by the dispatcher to the MCU, a notification indicating that execution of the fourth target task is completed.

25. The method according to any one of claims 21 to 24, wherein the method further comprises:
reading, by the scheduler, the descriptor of the fourth target task from the third buffer; and
if the descriptor of the fourth target task further comprises a first target index number, notifying, by the scheduler, the third buffer to obtain and cache a descriptor of first target data, wherein the first target index number is used to identify the first target data, and input data of the fourth target task comprises the first target data.

26. The method according to claim 25, wherein the plurality of first target tasks comprise the fourth target task; and
the method further comprises:
reading, by the dispatcher, the descriptor of the first target data from the third buffer; and
if the descriptor of the first target data comprises a second target index number, generating, by the dispatcher, a first cache management operation task, and dispatching the first cache management operation task to the execution apparatus, wherein the second target index number is used to identify the fourth target task, and the first cache management operation task indicates to prefetch the first target data.

27. The method according to claim 25 or 26, wherein the plurality of second target tasks comprise the fourth target task, the descriptor of the first target data further comprises a second target count, the second target count indicates a quantity of sixth target tasks whose execution is uncompleted, input data of the sixth target task comprises the first target data, and the sixth target task comprises the fourth target task; and
the method further comprises:
after the MCU receives, from the dispatcher, the notification indicating that execution of the fourth target task is completed, notifying, by the MCU, the third buffer to subtract one from the second target count.

28. The method according to claim 27, wherein the method further comprises:
when the second target count is decreased to zero, sending, by the MCU, a second cache management operation task to the scheduler, wherein the second cache management operation task indicates to invalidate the first target data.

29. The method according to any one of claims 21 to 28, wherein the plurality of first target tasks comprise the fourth target task; and
the method further comprises:
reading, by the dispatcher, the descriptor of the fourth target task from the third buffer; and
if the descriptor of the fourth target task further comprises a third target index number, notifying, by the dispatcher, the third buffer to obtain and cache a descriptor of second target data, wherein the third target index number is used to identify the second target data, and the second target data comprises a part or all of output data of the fourth target task.

30. The method according to claim 29, wherein the plurality of second target tasks comprise the fourth target task, the descriptor of the second target data comprises a third target count, the third target count indicates a quantity of seventh target tasks whose execution is uncompleted, the second target data comprises a part or all of output data of the seventh target task, and the seventh target task comprises the fourth target task; and
the method further comprises:
after the MCU receives, from the dispatcher, the notification indicating that execution of the fourth target task is completed, notifying, by the MCU, the third buffer to subtract one from the third target count.

31. The method according to claim 30, wherein the method further comprises:
when the third target count is decreased to zero, sending, by the MCU, a third cache management operation task to the scheduler, wherein the third cache management operation task indicates to write the second target data to a host, and the scheduling apparatus is coupled to the host.

32. The method according to any one of claims 21 to 31, wherein the plurality of first target tasks comprise the fourth target task, and the plurality of second target tasks comprise the fourth target task; and
the method further comprises:
reading, by the dispatcher, the descriptor of the fourth target task from the third buffer; and
if the descriptor of the fourth target task further comprises a fourth target index number, notifying, by the dispatcher, the third buffer to obtain and cache a descriptor of an eighth target task, wherein the fourth index number is used to identify the eighth target task, and the eighth target task depends on the fourth target task.

33. The method according to claim 32, wherein the descriptor of the eighth target task comprises a fourth target count, the fourth target count indicates a quantity of ninth target tasks whose execution is uncompleted, the eighth target task depends on the ninth target task, and the ninth target task comprises the fourth target task; and
the method further comprises:
after the MCU receives, from the dispatcher, the notification indicating that execution of the fourth target task is completed, notifying, by the MCU, the third buffer to subtract one from the fourth target count.

34. The method according to claim 33, wherein the method further comprises:
when the fourth target count is decreased to zero, sending, by the MCU, the eighth target task to the scheduler.
